(19) Europäisches Patentamt
European Patent Office
Office européen des brevets

(11) **EP 0 622 002 B1**

(12) **EUROPEAN PATENT SPECIFICATION**

(45) Date of publication and mention
of the grant of the patent:
**26.08.1998 Bulletin 1998/35**

(21) Application number: **93921063.9**

(22) Date of filing: **22.09.1993**

(51) Int Cl.6: **H04N 5/92**

(86) International application number:
**PCT/JP93/01362**

(87) International publication number:
**WO 94/07332 (31.03.1994 Gazette 1994/08)**

(54) **DIGITAL VIDEO SIGNAL PROCESSING APPARATUS AND METHOD**

VORRICHTUNG UND VERFAHREN ZUR VERARBEITUNG VON DIGITALEN VIDEOSIGNALEN

APPAREIL ET PROCEDE DE TRAITEMENT DE SIGNAUX VIDEO NUMERIQUES

(84) Designated Contracting States:
**AT DE FR GB IT NL**

(30) Priority: **22.09.1992 JP 277956/92**
**04.12.1992 JP 350577/92**
**18.12.1992 JP 355558/92**

(43) Date of publication of application:
**02.11.1994 Bulletin 1994/44**

(60) Divisional application: **97201484.9 / 0 794 667**

(73) Proprietor: **SONY CORPORATION**
**Tokyo 141 (JP)**

(72) Inventors:
• **FUJINAMI, Yasushi Sony Corporation**
**Shinagawa-ku Tokyo 141 (JP)**
• **VELTMAN, Mark Sony Corporation**
**Shinagawa-ku Tokyo 141 (JP)**

(74) Representative: **Cotter, Ivan John et al**
**D. YOUNG & CO.**
**21 New Fetter Lane**
**London EC4A 1DA (GB)**

(56) References cited:
EP-A- 0 396 285          EP-A- 0 505 985
EP-A- 0 545 323

• **SIGNAL PROCESSING. IMAGE COMMUNICATION vol. 2, no. 2 , August 1990 , AMSTERDAM NL pages 155 - 169 XP243475 PEREIRA ET AL. 'A CCITT compatible coding algorithm for digital recording of moving images'**
• **SIGNAL PROCESSING. IMAGE COMMUNICATION vol. 2, no. 2 , August 1990 , AMSTERDAM NL pages 127 - 144 XP243473 PURI ET AL. 'Video coding with motion-compensated interpolation for CD-ROM applications'**
• **SIGNAL PROCESSING. IMAGE COMMUNICATION vol. 2, no. 2 , August 1990 , AMSTERDAM NL pages 171 - 185 XP243476 HERPEL ET AL. 'Adaptation and improvement of CCITT Recommendation Model 8 video coding for digital storage media applications'**
• **IEEE 1990 INTERNATIONAL CONFERENCE ON COMSUMER ELECTRONICS, DIGEST OF TECHNICAL PAPERS June 1990 pages 46 - 47 XP169759 HERPEL ET AL. 'Video coding for recording on magneto-optical disk'**

## Description

### TECHNICAL FIELD

This invention relates to an apparatus and method for processing a variable-rate coded signal prior to recording so that high-speed searching can be carried out on a recording medium on which the processed signal is recorded. The invention also relates to an apparatus and method for performing a high-speed search on a medium on which a processed variable-rate coded signal is recorded. Finally, the invention relates to a recording of the processed variable-rate coded signal.

### BACKGROUND ART

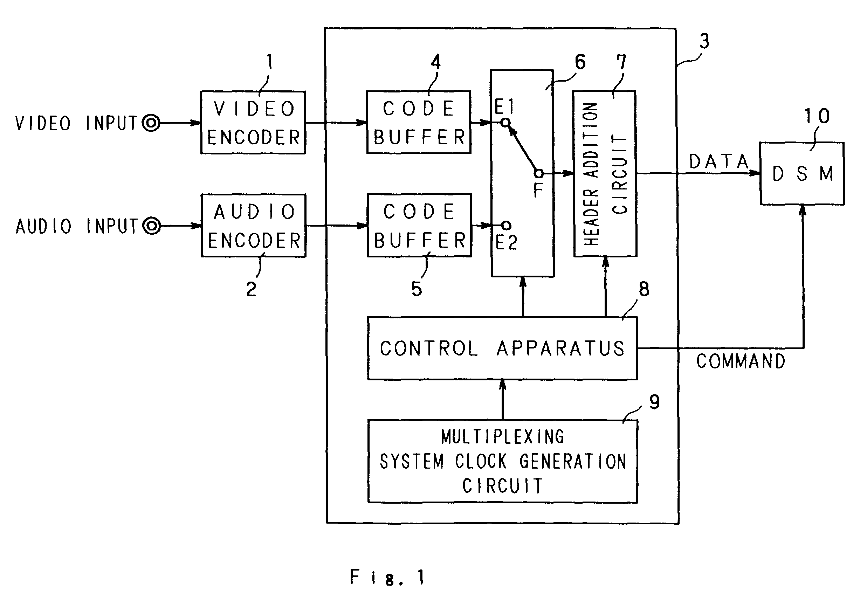

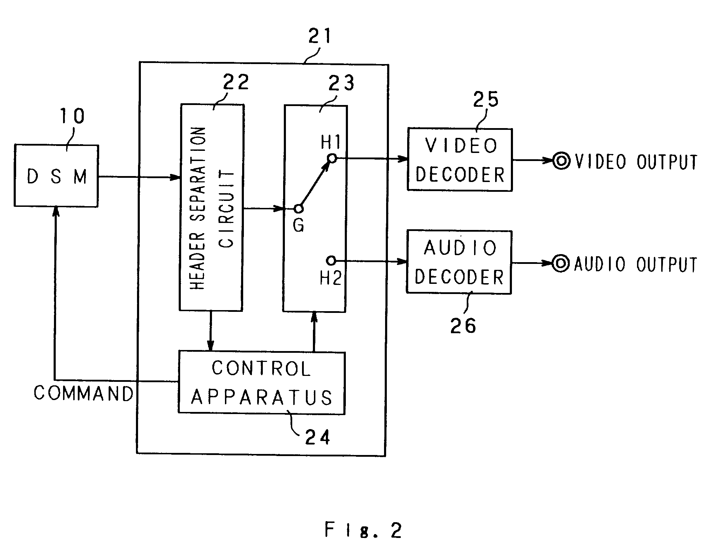

Examples of a conventional recording apparatus and a conventional reproducing apparatus are shown in Figures 1 and 2. Referring to Figure 1, a digital video signal to be recorded is compressed and coded by the video encoder 1, and then fed into the video signal buffer 4 in the multiplexing circuit 3. The digital audio signal to be recorded is compressed and coded by the audio encoder 2, and then fed into to the audio signal buffer 5 in the multiplexing circuit 3.

The output terminals of the signal buffers 4 and 5 are connected to the input terminals E1 and E2 of the switching circuit 6, respectively. The output terminal F of the switching circuit 6 is connected to the input terminal of the header addition circuit 7. The output of the header addition circuit 7 is supplied to the digital storage medium (DSM) 10, which includes, for example, a magneto-optical disk or a magnetic disk, e.g., a hard disk. The control circuit 8 receives system clock signals from the multiplexing system clock generation circuit 9, and causes the switching circuit 6 to connect the output terminal F to the input terminals E1 and E2 successively at a predetermined time interval. This successively fetches video signal bytes from the video signal buffer 4 and audio signal bytes from the audio signal buffer 5, thereby time division multiplexing the audio and video signals.

The control circuit 8 causes the switching circuit 6 and the header addition circuit 7 to produce a multiplexed signal having the format multiplexing system set forth in the ISO 11172 (MPEG) standard, the multiplexed signal includes one or more packs (PACK) and one ISO_11172_end_code. The ISO_11172_end_code is a code of 32 bits and is, when represented in the hexadecimal notation, 0x000001B9. The prefix Ox indicates hexadecimal notation, where x is indeterminate.

Each pack includes a header, which includes a Pack_Start_Code, an System Clock Reference (SCR), a MUX_ Rate, and one or more packets (Packet). The Pack_Start_Code of the header is a code of 32 bits and is 0x000001B4, the prefix Ox once again indicating hexadecimal notation. A pack has a variable length up to a maximum of 2,048 bytes.

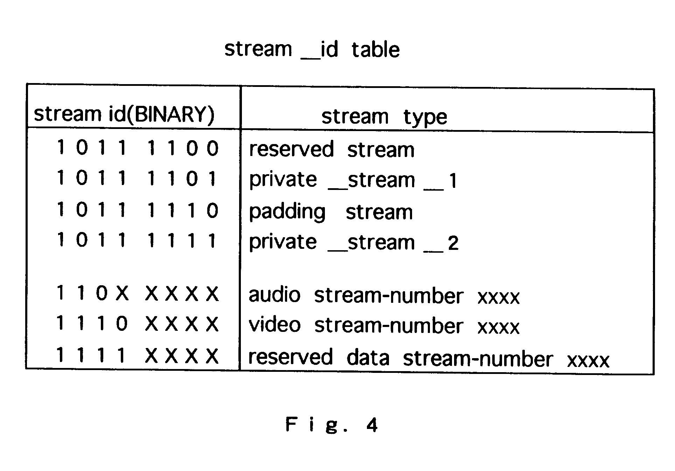

Each packet includes a header, which includes a Packet_Start_Code_Prefix, a stream_ID, a Packet_length, a Presentation Time Stamp (PTS), and a Decoding Time Stamp (DTS), and a packet data portion. The Packet_Start_Code_Prefix is a code of 24 bits and is 0x000001. The Stream_ID is a code of 8 bits and indicates the type of the packet, as shown in Figure 4. The Packet_length (16 bits) indicates the length of the packet following it.

In the packet data portion of each packet, a portion of the digital audio signal (when the stream type indicates an audio stream) of a portion of the video signal (when the stream type indicates a video stream) is recorded. Further, since each audio stream can have one of 32 different stream_ IDs and the each video stream can have one of up to 16 different stream_ IDs, up to 32 different audio signals and up to 16 different video signals can be multiplexed.

Subtitle data, for example, is located in a reserved stream. Private_stream_1 and private_stream_2 do not have defined applications. A padding_stream is used to increase the amount of data.

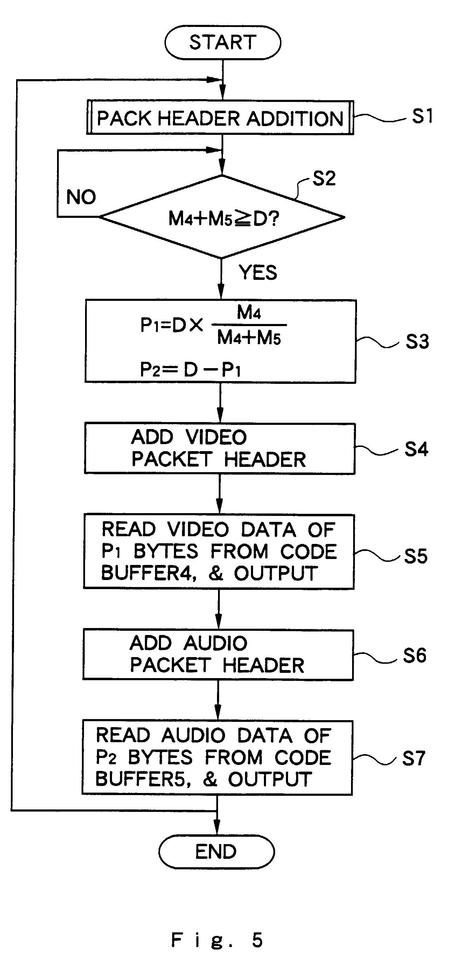

The control circuit 8 controls adding headers and reading signal bytes using an algorithm such as that shown, for example, in Figure 5 so that a total of 2,048 bytes are included in each pack in accordance with the format described above.

Referring to Figure 1 and 5, at step S1, the control circuit 8 instructs the header addition circuit 7 to generate a pack header. Then, at step S2, the control circuit 8 waits until the sum of M4 and M5 is equal to or greater than the number of signal bytes D included in one pack. In other words, the control circuit 8 waits until the total number of signal bytes accumulated in the signal buffers 4 and 5 is equal to the number of bytes of video signal written in the video signal buffer 4, and M5 represents the number of bytes of audio signal written in the audio signal buffer 5. D represents a total number of signal bytes that can be accommodated in one pack. To simplify the description, it will be assumed that D is a constant obtained by subtracting the number of bytes in the pack headers, the number of bytes in the video packet headers, and the number of bytes in the audio packet headers, from the number of bytes (2,048) in a pack.

In step S3, the number of bytes P1 of video signal that will be accommodated in the pack and the number of bytes P2 of audio signal that will be accommodated in the pack are calculated using the following equations:

$$P1 = D * M4/(M4 + M5)$$

$$P2 = D - P1$$

Thus, P1 and P2 are values obtained by distributing the total number of signal bytes D accommodated by the pack according to the ratio of numbers of bytes M4 and M5 accumulated in the signal buffers 4 and 5.

At step S4, after the numbers of signal bytes are determined, the control circuit 8 instructs the header addition circuit 7 to generate a video packet header, and to feed the video packet header to the DSM 10. Then, at step S5, the control circuit 8 transfers P1 bytes of video signal from the video signal buffer 4 to the DSM 10. At step S6, the control circuit 8 causes the header addition circuit to generate an audio packet header, and to feed it to the DSM 10. At step 7, the control circuit 8 transfers P2 bytes of audio signal from the signal buffer 5 to the DSM 10. The DSM 10 records the multiplexed signal received from the multiplexing circuit 3.

The multiplexed signal recorded on the DSM 10 in this manner is reproduced and decoded by the reproducing apparatus shown in Figure 2. The header separation circuit 22 in the separation circuit 21 separates pack headers and packet headers from the multiplexed signal read out from the DSM 10. The header separation circuit 22 supplies the headers to the control circuit 24, and supplies the multiplexed audio signal and the video signal to the input terminal G of the switching circuit 23. The output terminals H1 and H2 of the switching circuit 23 are connected to the input terminals of the video decoder 25 and the audio decoder 26, respectively. The control circuit 24 in the separation circuit 21 successively connects the input terminal G of the switching circuit 23 to the output terminals H1 and H2 in accordance with the stream_ID of the packet header received from the header separation circuit 22. In this way, the audio signal and the video signal are demultiplexed from the time-division multiplexed signal, and are supplied to the corresponding decoder.

When the video signal fed into the multiplexing circuit 3 is compressed in accordance with the MPEG coding standard, this imposes limitations on performing random access or searching operations. A video signal that is compressed according to the MPEG standard includes intra-picture coded pictures, I (intra) pictures, and two types of inter-picture coded pictures: P (forward predictive) pictures and B (bidirectional predictive) pictures. Of the three types of pictures, only I-pictures are compressed independently of other pictures, and can therefore be said to be intrinsically expandable. To decode the video signal of an I-picture requires only the video signal of the I-picture itself, and does not require the video signals of other pictures. However, because of this, the coding efficiency of I-pictures is low. Since P-pictures and B-pictures are obtained by decoding difference signals from preceding and/or following pictures, the compression efficiency of such pictures is high. However, decoding a P-picture or a B-picture requires the video signal of a reference picture preceding or following the picture being decoded in addition to the video signal of the picture being decoded. Consequently, two I-pictures or so are normally reproduced each one second so as to provide a random access ability while retaining an acceptable average compression efficiency.

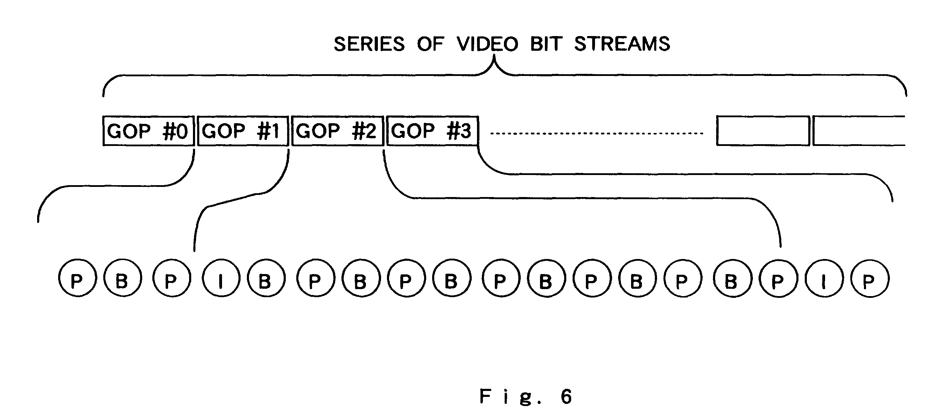

Figure 6 shows a diagram of a digital video signal including I-pictures, P-pictures and B-pictures as it is recorded on the DSM 10. The digital video signal is divided into more than one Groups of Pictures (GOPs). Each GOP begins with an I-picture. When the video signal is compressed at a fixed rate, since an I-picture periodically appears at a predetermined location, the location can be determined by calculation and the I-picture accessed. However, when the video signal is compressed at a variable rate, the location of the I-pictures is indeterminate, and it is thus difficult to access the I-pictures.

When a search command is received by the reproducing apparatus shown in Figure 2, a main control apparatus (not shown) delivers to the control circuit 24, the video decoder 25, and the audio decoder 26, an instruction to transition to search mode. In search mode, the video decoder 25 decodes only I-pictures in the video signal received from the switching circuit 23. Alternatively, only video signals representing I-pictures are selected by the separation circuit 21 and fed into the video decoder 25. The video decoder 25 then decodes the video signals that it receives.

In search mode, the control circuit 24 delivers to the DSM 10 a command to move the read position on the disk forwards or backwards. While the amount of movement of the read position depends upon the search rate, the compression ratio, etc. Thus, generally, the amount of movement increases as the rate of the search increases and as the compression ratio increases. When the read position has moved to the selected location, the multiplexed signal is read from the DSM 10 and fed into the separation circuit 21. The header separation circuit 22 separates the video decoder 65 decodes the I-picture that appears first, and feeds it to the video output. The audio decoder 66 is muted in search mode.

In the manner just described, a search operation that successively repeated random access. Thus, when, for example, the user commands a high-speed forward search, the video decoder 25 searches for an I-picture by skipping a predetermined number of frames of the video signal it receives, and then decodes and feeds out each resulting I-picture. Alternatively, the DSM 10 can search for I-pictures, and only reproduce video signals of I-pictures for decoding by the video decoder 25. A search operation involving a successive reproduction of I-pictures is carried out by repeating such operations.

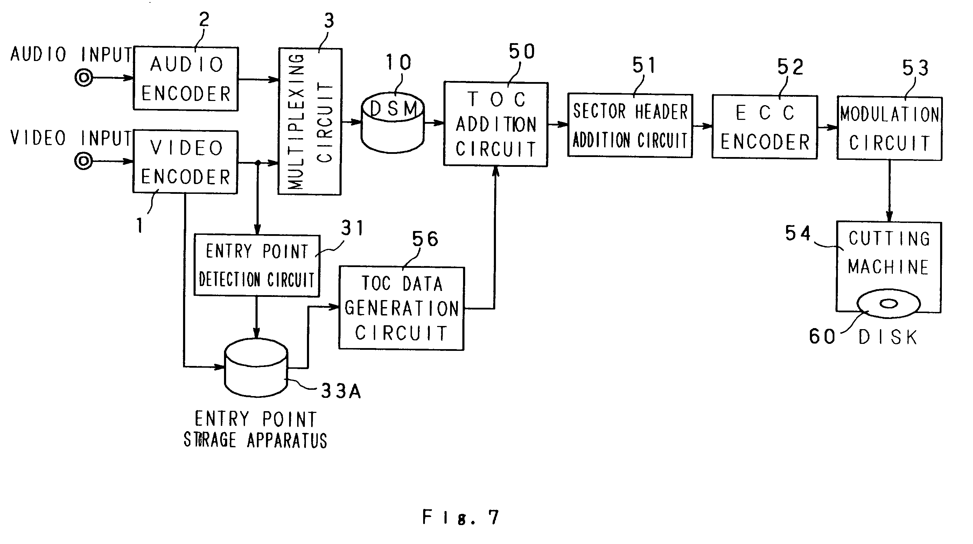

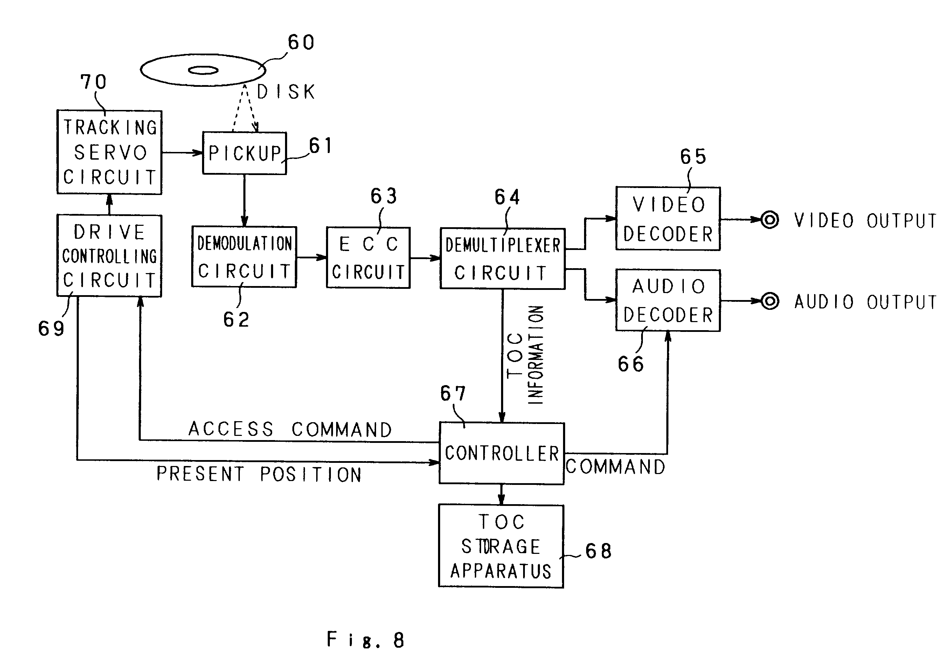

A different example of a conventional recording apparatus and a different example of conventional reproducing apparatus are shown in Figures 7 and 8, respectively. Referring to Figure 7, the digital video signal to be recorded is fed into the video encoder 1, and the digital audio signal to be recorded is fed into the audio encoder 2. The outputs of the video encoder 1 and the audio encoder 2 are fed into the multiplexing circuit 3. The output terminal of the multiplexing circuit 3 is connected to the DSM 10, where the resulting multiplexed signal is stored for a first time.

The multiplexed signal read out of the DSM 10 is fed to the table of Contents (TOC) addition circuit 50, which adds a TOC to the beginning of the multiplexed signal. Generation of the TOC will be described in detail bellow. The output of the TOC addition circuit 50 is fed to the input terminal of the sector header addition circuit 51. The output of the sector header addition circuit 51 is fed to the Error Correction Coding (ECC) encoder 52. The output of the ECC encoder 52 is fed via the modulation circuit 53 to the cutting machine 54, which cuts the optical disk master 60 in response to the digital signal generated as just described. Plural optical disks for distribution to consumer or professional users, such as the optical disk 60A shown in Figure 8, are manufactured using the optical disk master 60.

The input terminal of the entry point storage device 33A is connected to the output terminal of the video encoder 1, or to the video entry point detection circuit 31, so that it receives and stores entry point information from either one of them. The output of the entry point storage device 33A is fed to the TOC generation circuit 56, which arranges the format of the TOC. The TOC is fed to the TOC addition circuit 50, which adds the TOC to the beginning of the multiplexed signal, as described above.

The video signal to be recorded is compressed and coded by the video encoder 1, and then fed to the multiplexing circuit 3. The audio signal to be recorded is compressed and coded by the audio encoder 2, and then fed to the multiplexing circuit 3. The multiplexing circuit 3 multiplexes the coded video signal and the coded audio signal it receives using time-division multiplexing. The time-division multiplexed signal is fed into the DSM 10, which stores it. This process is continued until all of the video signal and all of the audio signal have been recorded on the DSM 10.

An output of the video encoder 1 is connected to the entry point storage device 33A. When the video encoder 1 is capable of providing an entry point generation signal, it provides an entry point generation signal when it generates an I-picture. The entry point storage device 33A receives from the video decoder 1, and stores, the entry point generation signal generated each time the video encoder generates an I-picture.

An output of the video encoder 1 is also connected to the input terminal of the video entry point detection circuit 31. When the video encoder 1 is incapable providing an entry point generation signal, or when the digital video signal to be recorded is already in encoded, the video entry point detection circuit 31 either generates an entry point generation signal each time an I-picture is generated, or detects the entry points in the video signal it receives from the video encoder 1, and provides an entry point generation signal in response. The entry point storage device 33A receives from the video entry point detection circuit 31, and stores, an entry point generation signal each time an entry point is detected.

After the video signal and the audio signal have been coded and multiplexed, the resulting multiplexed signal is written in the DSM. Simultaneously, the entry point required to construct a TOC are all stored in the entry point data storage device 33A. Then processing for adding the TOC is started.

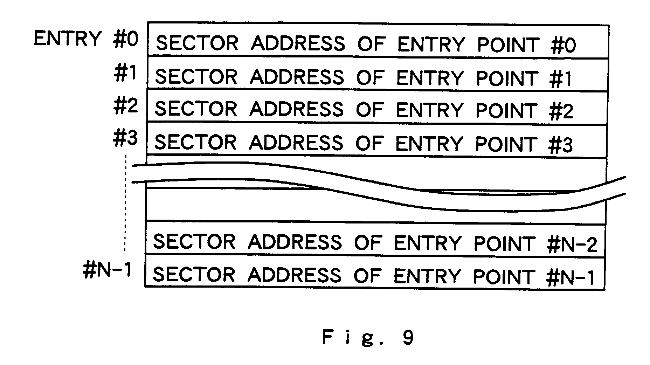

First, the required entry points are fed from the entry point storage device 33A to the TOC generation circuit 56. A selection is then made by the user or controller (not shown). The entry points fed to the TOC generation circuit 56 are arranged in the format shown in Figure 9. In this example, the TOC includes the positions of N entry points. Each entry point is indicated by a sector address of 4 bytes.

Returning to figure 7, the TOC generated by the TOC generation circuit 50 is delivered to the TOC addition circuit 50, whence it is fed to the sector header addition circuit 51 ahead of the multiplexed signal stored in the DSM 10. Then, following the TOC data, the multiplexed signal passes from the DSM 10, through the TOC addition circuit 50, to the sector header addition circuit 51.

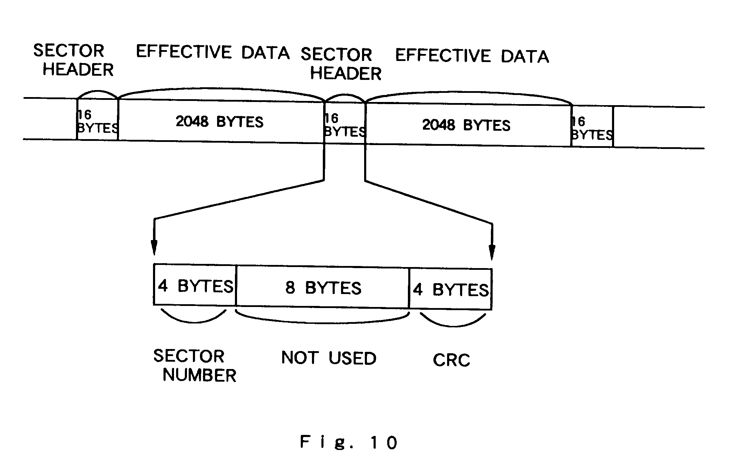

As shown in Figure 10, each sector accommodates 2,048 bytes in addition to the sector header of 16 bytes. The sector header includes the sector number of the sector. The sector header addition circuit 51 divides multiplexed signal received from the TOC addition circuit 50 into blocks of 2,048 bytes, and adds a sector header of 16 bytes that includes the sector number. The output of the sector header addition circuit 51 is fed into the error correction coding (ECC) encoder 52.

The ECC encoder 52 adds a prescribed amount of parity data to multiplexed signal received from the sector header addition circuit 51, and feeds the resulting signal to the modulation circuit 53. The signal from the modulation circuit 53 is fed to the cutting machine 54, which writes the signal onto the optical disk master 60.

In the reproducing apparatus shown in Figure 8, the signal recorded on the optical disk 60A is reproduced by the pickup 61. The output signal from the pickup 61 is fed into the demodulation circuit 62, which demodulates the signal from the pickup 61, and feeds the demodulated signal into the ECC circuit 63. The ECC circuit 63 detects and corrects errors in the demodulated signal, and feeds the resulting multiplexed signal into the demultiplexer circuit 64.

The video signal 66 demultiplexed by the demultiplexer circuit 64 is fed into the video decoder 65, while the audio signal is fed from the demultiplexer circuit to the audio decoder 66. The video decoder 65 and the audio decoder 66 individually reverse the compression of the compressed signals to provide uncompressed output signals.

In response to an instruction from the user (not shown) to reproduce the signal recorded on the disc, the controller 67 sends a command to the video decoder 65 and the audio decoder 66, and provides an access command to the drive control circuit 69. The drive control circuit 69 drives the pickup 61 using the tracking servo circuit 70 in accordance with the command from the controller 67 to effect reproduction from the disc.

The TOC positioned at the beginning of the signal recorded on the disk is separated by the demultiplexer circuit 64, fed to the controller 67, and is stored into the TOC storage device 68. The TOC is read out from the TOC storage device 68 when necessary, and is used by the controller 67.

Operation of the conventional disk reproducing apparatus shown in Figure 8 will now be described. When the optical disc 60A is inserted, the controller 67 delivers a first sector reading command to the drive control circuit 69. The drive control circuit 69 drivers the pickup 61 by way of the tracking servo circuit 70 to start reproduction from the disc at the position of the top sector on the disk 60A.

The pickup 61 illuminates the optical disk 60A with a laser beam, and reproduces the signal recorded on the optical disk 60A using reflected light from the disk. The signal from the pickup 61 is fed to, and is demodulated by, the demodulation circuit 62. The demodulated signal is fed to the ECC circuit 63, where error detection and correction are performed. The resulting multiplexed signal from the ECC circuit is fed to the demultiplexer circuit 64.

The TOC is recorded in first sector of the disk. The TOC is demultiplexed by the demultiplexer circuit 64 and is fed to the controller 67. The controller 67 stores the TOC in the TOC storage device 68, and displays the TOC to the user (not shown) on a display (not shown).

In response to an instruction from the user (not shown) to reproduce an item selected from the TOC, the controller 67 delivers a command to the drive control circuit 69 to start operation. The drive control circuit 69 drives the pickup 61 by way of the tracking circuit 70 to start reproduction from the read position on the disk 61A indicated by the user's selection from the TOC. The drive control circuit 69 also simultaneously delivers a command to the video decoder 65 and to the audio decoder 66 to prepare to the signals reproduced from the disk.

Simultaneously with the reading the TOC, the pickup 61 illuminates the optical disk 60A with a laser beam, and reproduces the signal recorded on the disk using reflected light from the disk. The signal from the pickup 61 is fed to, and is demodulated by, the demodulation circuit 62. The demodulated signal is fed to the ECC circuit 63, where error detection and correction are performed. The resulting multiplexed signal is fed into the demultiplexer circuit 64.

The video signal demultiplexed by the demultiplexer circuit 64 is fed to the video decoder 65, while the audio signal demultiplexed by the demultiplexer circuit is fed to the audio decoder 66. The video signal and the audio signal, which are compressed, are expanded by the video decoder 65 and the audio decoder 66, respectively, to provide an uncompressed digital video signal and an uncompressed digital audio signal.

When the multiplexed video signal is compressed in accordance with the MPEG coding standard, this imposes a limitation on performing random access or searching operations. In particular, as described above, a video signal compressed according to the MPEG standard includes intra-picture coded pictures, I (intra) pictures, and two types of inter-picture coded pictures: P (forward predictive) pictures and B (bidirectional predictive) pictures. Of the three types of pictures, only I-pictures are coded independently of other pictures. To decode the video signal of an I-picture requires only the video signal of the I-picture itself, and does not require video signals relating to other pictures. Hence, an I-picture can be decoded by itself. However, because of this, the compression efficiency of I-pictures is low. Since P-pictures and B-pictures are obtained by decoding difference signals from preceding and/or following pictures, the compression efficiency of such pictures is high. To decode a P-picture or a B-picture requires the video signal of a reference picture preceding or following the picture being decoded in addition to the video signal of the picture being decoded. Consequently, two I-pictures or so are normally reproduced each second to provide a random access ability while retaining an acceptable average compression efficiency.

The digital video signal including I-pictures, P-pictures and B-pictures recorded on the optical disk 60A is divided into more than one Groups of Pictures (GOPs) as described above with reference to Figure 6. As described above, each GOP begins with an I-picture. When the video signal is compressed at a fixed rate, since an I-picture periodically appears at a predetermined location, the location can be determined by calculation and the I-picture accessed. However, when the video signal is compressed at a variable rate, the location of the I-pictures is indeterminate, and it is thus difficult to access the I-picture.

In particular, when a search command is received by the disk reproducing apparatus shown in Figure 8, the controller 67 delivers to the drive control circuit 69, the video decoder 65, and the audio decoder 66, and instruction to transition to search mode. In search mode, the video decoder 66 decodes only the I-pictures in the video signal it receives. Alternatively, only video signals representing I-pictures are selected and fed by the demultiplexer circuit 64 to the video decoder 65. The video decoder 65 then decodes the video signals that it receives.

In search mode, the drive control circuit 69 delivers to the tracking servo 70 a command to move the read position on the disk forwards or backwards. While the amount of movement of the read position then depends upon the search rate, the compression ratio, etc. Thus, generally, the amount of movement increases as the rate of the search increases, and as the compression ratio increases. When the read position has moved to the selected location, the signal from the pickup 21 is fed to the demultiplexer circuit 64 via the demodulation circuit 62, and the ECC circuit 63. The demultiplexer circuit 64 demultiplexes the video signal and supplies it to the I-picture that appears first, and feeds it to the video output. The audio decoder 66 is muted in search mode.

In the manner just described, a search operation that successively reproduces I-picture is performed by carrying out repeated random accesses. Thus, when, for example, the user commands a high-speed forward search, the video decoder 25 searches for an I-picture by skipping a predetermined number of frames of the video signal it receives, and then decodes and feeds to the output each resulting I-picture. Alternatively, in response to an instruction from the controller 67, the drive control circuit 69 drives the tracking servo circuit 70 to search for an I-picture, and only the video signals of I-pictures are supplied to, and decoded by, the video decoder 65. A search operation involving a successive reproduction of I-picture is carried out by repeating such operations.

Subsequently, the time required for decoding of an I picture upon searching will be estimated. When the DSM 10 is regarded as a CD-ROM drive, the time is a sum of the following parameters.

Head seek time: M (depending upon the mechanical structure) Servo settling time: N (depending upon a servo circuit) Maximum rotation waiting time: about 300 milliseconds or so at an outer circumference of a compact disk
Data read time: 150 milliseconds or so for an I-picture

Since the time relates to a searching operation for an adjacent I-picture, it is forecast that, of the parameters given above, the head seek time M and the servo settling time N are very short comparing with the rotation waiting time, and accordingly, they are ignored. As a result, it is considered that the period of the variation in picture is about 450 milliseconds in the maximum.

The maximum rotation waiting time is a time required when an outermost circumference (diameter 116 mm) of a compact disk is waited at the linear velocity of 1.2 m/s.

Meanwhile, the data read time can be calculated in the following manner.

In the case of the MPEG, the amounts of data allocated to an I-picture, a P-picture and a B-picture are different from one another so that compression is performed efficiently. For example, 150 Kbits are allocated to an I-picture since compression only in the picture is involved; 75 Kbits are allocated to a P-picture since also this is comparatively important; and 5 Kbits are allocated to a B-picture since it can be interpolated bidirectionally. In particular, a GOP which is constituted from 15 pictures involves a total of 500 Kbits since it includes one I-picture, four P-pictures and ten B-pictures, and 1 Mbits require one second, which coincides with the data rate of a CD-ROM. In this instance, reading of one I-picture requires 150/1,000 = 150 milliseconds. From the foregoing calculation, the picture changes one by on for each 450 milliseconds in the maximum.

In the conventional apparatus, because the position of an I-picture (i.e., an access point) is not known, the search process must wait for an access point to appear after the read position has been moved by some amount. Consequently, the search operation can have a cycle time that is so long that rapid searching is difficult.

Further, in the conventional apparatus, since the rotation waiting time and the data read time for an I-picture are very long as described above, the period of the variation in picture upon searching is very long. Consequently, there is a subject in that a searching operation achieves a variation only of two or so pictures for on second and the operation is poor. The present invention has been made in view of the situation just described, and makes it possible to locate the access point rapidly to achieve rapid searching.

It is another object of the present invention to realize a variation in picture which is higher than ever upon searching.

DISCLOSURE OF INVENTION

Accordingly, a first aspect of the invention provides an apparatus for preparing a variable-rate coded signal using a variable compression ratio and including a signal portion of a predetermined type, for recording on a recording medium. The apparatus comprises a circuit that generates a flag signal indicating the signal portion of the a predetermined type in the variable-rate coded signal. A signal-type marker generating circuit generates a signal-type marker in response to the flag signal. Finally, the apparatus includes a circuit that multiplexes the signal-type marker with the variable-rate coded signal to produce a multiplexed signal. The signal-type marker is located adjacent to the signal portion of the predetermined type in the multiplexed signal.

Where the multiplexed signal is divided into packs of plural packers, the signal marker is included in an entry pack located immediately preceding a packet that includes the signal portion of the predetermined type. Where the multiplexed signal is divided into sectors and each sector includes a sector header, the signal marker is included as subcode in the sector header of a sector that includes the signal portion of a predetermined type.

Each signal marker may include location information showing the location on the recording medium of an additional signal-type marker and its accompanying signal portion of the predetermined type. Each signal marker may include location information showing the locations on the recording medium of plural additional signal-type markers successively preceding and following the signal-type marker.

When the digital input signal is a video signal comprising plural pictures compressed either in an intra-picture mode or an inter-picture mode, a signal-type marker is generated when the picture is compressed in the intra-picture mode.

The invention also provides a method for preparing a variable-rate coded signal, generated by compressing a digital input signal using a variable compression ratio and including a signal portion of a predetermined type, for recording on a recording medium. According to the method of the invention, a flag signal is generated indicating the signal portion of the predetermined type in the variable-rate coded signal. A signal-type marker is generated in response to the flag signal. Finally, the signal-type marker is multiplexed with the variable-rate coded signal to produce a multiplexed signal. The signal-type marker is located adjacent to the signal portion of the predetermined type in the multiplexed signal.

Where the multiplexed signal is divided into packs of plural packets, the signal marker is included in an entry pack, and the multiplexing step locates the entry packet immediately preceding a packet that includes the signal portion of the predetermined type, Where the multiplexed signal is divided into sectors and each sector includes a sector header, the multiplexing step includes the signal marker as subcode in the sector header of a sector that includes the signal portion of a predetermined type.

The step of generating a signal marker may generate a signal marker including location information showing the location on the recording medium of an additional signal-type marker and its accompanying signal portion of the predetermined type. Signal markers may also be generated that include location information showing the locations on the recording medium of plural additional signal-type markers successively preceding and following the signal-type marker.

When the digital input signal is a video signal comprising plural pictures compressed either in an intra-picture mode or an inter-picture mode, the step of generating a signal-type marker generates a signal marker when the picture is compressed in the intra-picture mode.

The invention further provides an apparatus for successively reproducing portions of a multiplexed signal recorded on a recording medium to effect a high-speed search. The multiplexed signal includes a variable-rate coded signal and signal-type markers identifying signal portions of a predetermined type in the variable-rate coded signal. The apparatus comprises a system that reproduces a portion of the multiplexed signal from a read position on the recording medium. A demultiplexing circuit demultiplexes the variable-rate coded signal and a signal-type marker from the portion of the multiplexed signal. The apparatus also includes a control circuit that changes the read position in response to the signal-type marker.

The signal-type marker may include location information indicating a location on the recording medium of an additional signal-type marker, in which case, the control circuit changes the read position in response to the location information in the signal-type marker. The control circuit may include a circuit for extracting the location information from the signal-type marker, and may change the read position to a new read position indicated by the location information. Then, the reproducing system reproduces the multiplexed signal including the additional signal-type marker from the new read position.

The signal portion of the predetermined type may be an expandable portion of the variable-rate coded signal, and an expandable portion of the variable-rate coded signal may immediately follow each signal-type marker in the multiplexed signal. At each read position, the portion of the multiplexed signal reproduced by the reproducing system includes a signal-type marker and an expandable portion of the variable-rate coded signal. The apparatus may additionally include a circuit for expanding the expandable portion of the variable-rate coded signal extracted from the reproduces multiplexed signal by the demultiplexer, and for providing the expanded expandable portion as an output signal.

The invention also provides a method of successively reproducing portions of a multiplexed signal recorded on a recording medium to effect a high-speed search. The multiplexed signal includes a variable-rate coded signal and signal-type markers identifying signal portions of a predetermined type in the variable-rate coded signal. The method according to the invention repeats the following steps: portion of the multiplexed signal is reproduced from a read position on the recording medium; the variable-rate coded signal and a signal-type marker are demultiplexed from the reproduced portion of the multiplexed signal; and the read position is changed in response to the signal-type marker.

The signal-type marker may include location information indicating a location on the recording medium of an additional signal-type marker, in which case, the read position is changed in response to the location information in the signal-type marker. The location information may be extracted from the signal-type marker, and the read position changed to a new read position indicated by the location information. Then, the multiplexed signal including the additional signal-type marker is reproduced from the new read position.

The signal portion of the predetermined type may be an intrinsically expandable portion of the variable-rate coded signal, and an intrinsically expandable portion of the variable-rate coded signal may immediately follow each signal-type marker in the multiplexed signal. At each read position, the portion of the multiplexed signal reproduces by the reproducing system includes a signal-type marker and an expandable portion of the variable-rate coded signal. The intrinsically expandable portion of the variable-rate coded signal extracted from the reproduced multiplexed signal by the demultiplexer may be expanded, and the expanded intrinsically expandable portion may be provided as an output signal.

The invention also provides a method of reproducing pictures from a recording medium in a fast search mode. Each picture is stored in the recording medium in the form of a video signal compressed in one of an intra-picture compression mode and an inter-picture compression mode. The video signal of a picture compressed in the intra-picture compression mode is an I-picture, The video signal of a picture compressed in the inter-picture compression mode with only forward prediction is a P-picture. The video signal of a picture compressed in the inter-picture compression mode with both forward and backward prediction is a B-picture. The method according to the invention repeats the following steps: a read position is jumped on the recording medium; an I-picture is immediately reproduced from the read position; and the I-picture and the at least one of a B-picture and a P-picture are expanded to provide an uncompressed output signal.

Finally, the invention provides a recording, comprising a recording medium and a multiplexed signal recorded in the recording medium. The multiplexed signal includes a variable-rate coded signal including signal portions of a predetermined type, and a signal-type marker adjacent each signal portion of the predetermined type. The signal-type marker identifies the signal portion of the predetermined type.

The signal-type marker may include location information indicating a location information indicating a location on the recording medium of an additional signal-type marker, or location information indicating location on the recording medium of plural adjacent signal-type markers successively disposed about the signal-type marker in the recording medium.

BRIEF DESCRIPTION OF DRAWINGS

Figure 1 is a block diagram showing the construction of an example of a conventional apparatus for recording multiplexed compressed audio and compressed video signals.

Figure 2 is a block diagram showing the construction of an example of a conventional apparatus for reproducing multiplexed compressed audio and compressed video signals.

Figure 3 shows the format of the multiplexed signal in the examples shown in Figures 1 and 2.

Figure 4 shows the stream_ID portion of the packet shown in Figure 3.

Figure 5 is a flow chart illustrating part of the operation of the example shown in Figure 1.

Figure 6 shows part of the compressed video signal recording on the disk of the DSM shown in Figures 1 and 2.

Figure 7 is a block diagram showing the construction of another example of a conventional apparatus in which the multiplexed signal is recorded on an optical disk.

Figure 8 is a block diagram showing a construction of another of a conventional apparatus in which the multiplexed signal is reproduced from an optical disk.

Figure 9 shows the structure of the Table of Contents (TOC) in the examples shown in Figures 7 and 8.

Figure 10 shows the sector structure in the conventional examples shown in Figures in the conventional examples shown in Figures 7 and 8.

Figure 11 is a block diagram showing the construction of an embodiment of a recording apparatus according to of the present invention.

Figure 12 is a block diagram showing the construction of an embodiment of reproducing apparatus according to the present invention.

Figure 13 shows the pack format on the disk of the DSM of the embodiment shown in Figures 11 and 12.

Figure 14 shows the format of the entry packet shown in Figure 13.

Figure 15 is a flow chart illustrating part of the operation of the embodiment shown in Figure 11.

Figure 16 is a block diagram showing the construction of another embodiment of a recording apparatus according to the present invention.

Figure 17 is a block diagram showing the construction of another embodiment of a reproducing apparatus according to the present invention.

Figure 18 shows the sector structure of the disk in the embodiments shown in Figures 16 and 17.

Figure 19 shows the subcode data on the disk in the embodiments shown in Figures 16 and 17.

Figure 20 shows the bit stream which is used to explain a data decoding method of the present invention.

BEST MODE FOR CARRYING OUT THE INVENTION

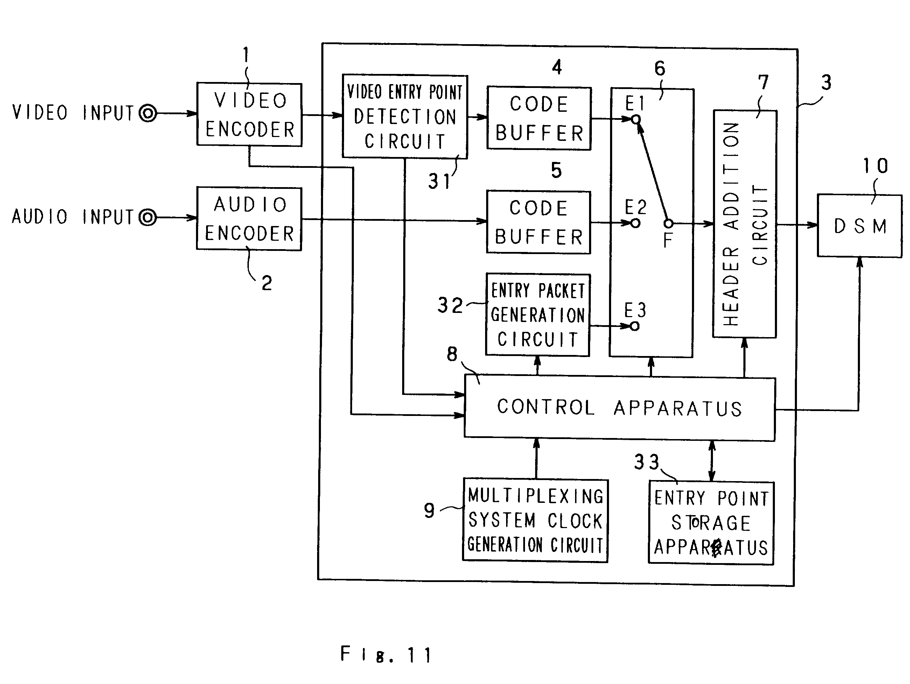

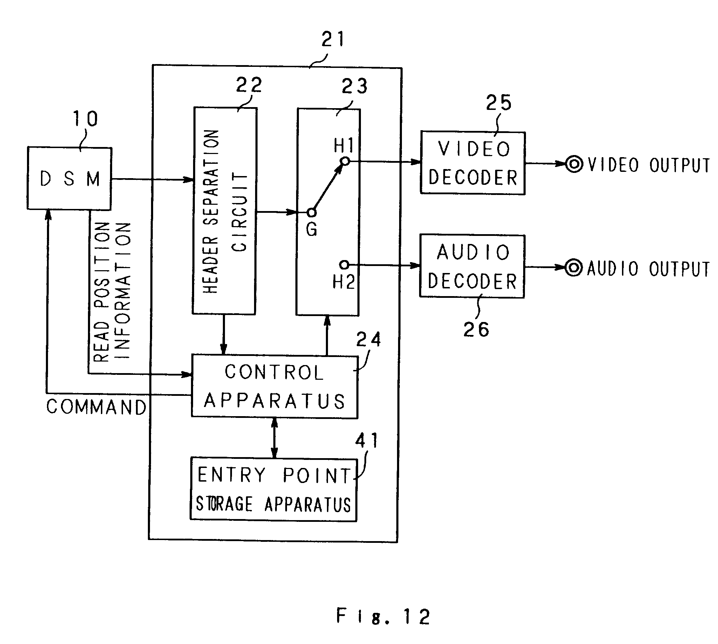

Figures 11 and 12 are block diagrams showing the construction of a first embodiment of a recording apparatus and a reproducing apparatus according to the present invention. Components corresponding to those in the conventional apparatus shown in Figures 1 and 2 are indicated by the same reference characters.

In the recording apparatus shown in Figure 11, the output terminal of the video encoder 1 is connected to the input terminal of the video entry point detection circuit 31, an output terminal of which is connected to the input terminal of the video signal buffer 4. The entry packet generation circuit 32 receives a control input from the control circuit 8, and supplies entry packets to the input terminal E3 in the switching circuit 6. The control circuit 8 also receives system clock signals from the multiplexing system clock generation circuit 9, and causes the switching circuit 6 to connect the output terminal F to the input terminals E1, E2, and E3 successively at a predetermined time interval. This successively fetches, and multiplexes by time-division multiplexing, the video signal from the video signal buffer 4, the audio signal from the audio signal buffer 5, and entry packets from the entry packet generation circuit 32. The time-division multiplexed signal is fed to the header addition circuit 7.

The control circuit 8 also causes the header addition circuit 7 to add a video packet header to the video signal read out from the video signal buffer 4, and to add an audio packet header to the audio signal read out from the audio signal buffer 5.

The control circuit 8 also receives as an input the entry point generation signal generated in response to an I-picture supplied by the video encoder 1 or the video entry point detection circuit 31, and causes the entry packet generation 32 to insert an entry packet at a predetermined position in the video signal. When the video encoder 1 is capable of providing an entry point generation signal, it provides an entry other hand, when the video encoder 1 is incapable of providing an entry point generation signal, or when the video signal to be recorded is already coded, the video entry point detection circuit 31 generates the entry point generation signal. The video entry point detection circuit generates an entry detection signal when an I-picture is generated, or when it detects an entry point in the video signal it receives from the video encoder 1. The entry point storage device 33 is a memory that can be read and written by the control circuit 8, and which stores the position of each detected entry point. The construction of the rest of the apparatus is similar to that shown in Figure 1.

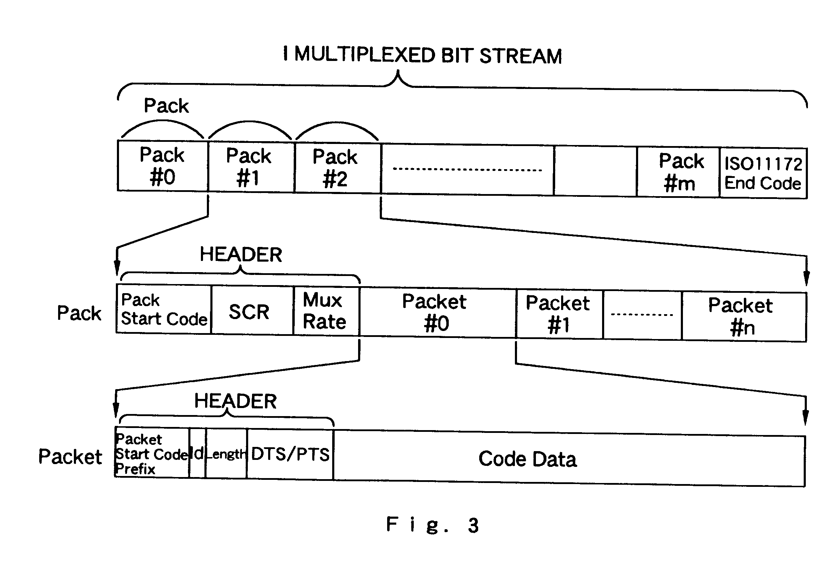

In the embodiment shown in Figure 11, the multiplexed signal includes at least one pack, and an ISO_11172_end_code. Each pack has the pack format shown in Figure 3. The pack begins with a Pack_Header consisting of a Pack_Start_Code, an SCR, and a MUX_Rate. Following the Pack_Header is a video packet consisting of a Video_Packet_Header followed by a portion of the video signal that includes no I-picture. Following the video packet is an entry packet, followed by another video packet consisting of a Video_Packet_Header and a portion of the video signal that includes an I-picture. Thus, an entry packet is located immediately prior to the Video_Packet_Header of a video packet that includes an I-picture, i.e., an entry point. Also, an audio packet, consisting of an Audio_Packet_Header followed by a portion of the audio signal follows the video packet.

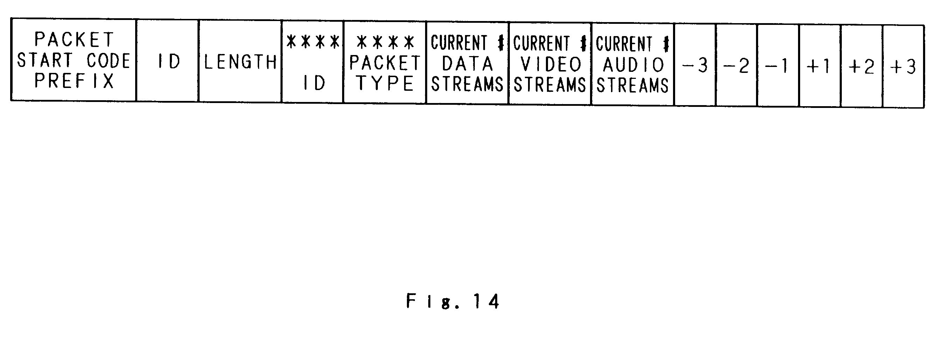

The entry packet has the format illustrated in Figure 14. The format corresponds to the packet format of the private_stream_2 packet defined by the MPEG standard. The entry packet begins with a Packet_Start_Code_Prefix, followed by a stream_ID of 0xBF in hexadecimal notation, and the length of the packet. This arrangement is similar to that to that of the packet header shown in Figure 3.

In entry packet according to the present embodiment, a ****_ id follows the packet length. The ****_id indicates that the private_stream_2 packet has a format peculiar to the party identified by ****. Following the ****_id, the ****_packet_type is disposed, which identifies the packet type from among the private packet types belonging to the identified party, and is 0xFF for an entry packet. There then follows current_#_data_streams, current_#_video_streams indicating the number of data streams, the number of video stream, and the number of audio streams multiplexed immediately prior to the current entry point.

Following current_#_audio_streams are entry_packet_-3, entry_packet_-2, entry_packet_-1, entry_packet_+1, entry_packet_+2, and entry_packet_+3. These indicate the relative distances between the potion of the current entry point and the position of the three previous entry points and the three following entry points in terms of the number of sectors of the disk in DSM 10. Alternatively, the positions of the preceding and following entry points can be indicated in terms of absolute location on the DSM 10.

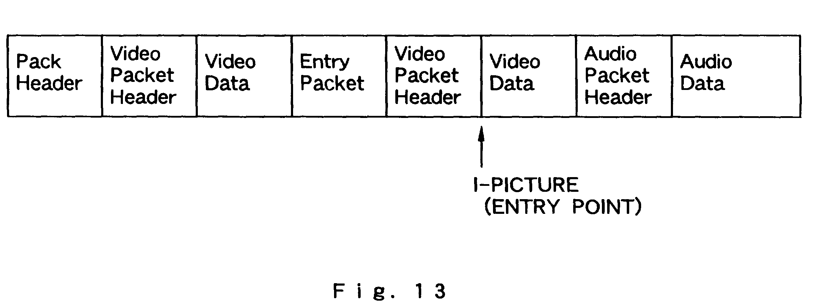

Operation of the embodiment shown in Figure 11 will now be described. The control circuit 8 receives an entry point generation signal from the video encoder 1 or from the entry point detection circuit 31, and inserts an entry packet immediately prior to the entry point (Figure 13). In particular, when the control circuit 8 receives an entry point generation signal, the control circuit 8 causes the entry packet generation circuit 32 to generate an entry packet. The control circuit also causes the switching circuit 6 to switch to the input terminal E3 so that the entry packet can be multiplexed with the video signal and the audio signal from the signal buffers 4 and 5, respectively, and supplied to the header addition circuit 7.

As shown in Figure 14, in each entry packet, the distances between the current entry point and the positions of the three previous entry points and the three following entry points are recorded in entry_packet_-3, entry_packet_-2, entry packet_-1 entry_packet_+1, entry_packet_+2, and entry_packet_+3, respectively. By storing the positions of the three prior entry points in the entry packet storage device 33, this information is known and can be recorded on the DSM 10 of the following entry points are not known when the current entry packet is recorded on the DSM 10. Therefore, the control circuit 8 stores the positions of all the entry points in the entry point storage device 33. Then, after all of the signals to be recorded have been recorded on the DSM 10, the control circuit 8 reads out from the entry point storage device 33 the positions of the three previous entry points and the three following entry points. The control circuit 8 supplies the read out positions to the DSM 10, which inserts them into each entry packet recorded on the DSM 10. Alternatively, the distances from the current entry point to the three previous and three following entry points can be calculated from the positions of the entry points and inserted into the entry packet.

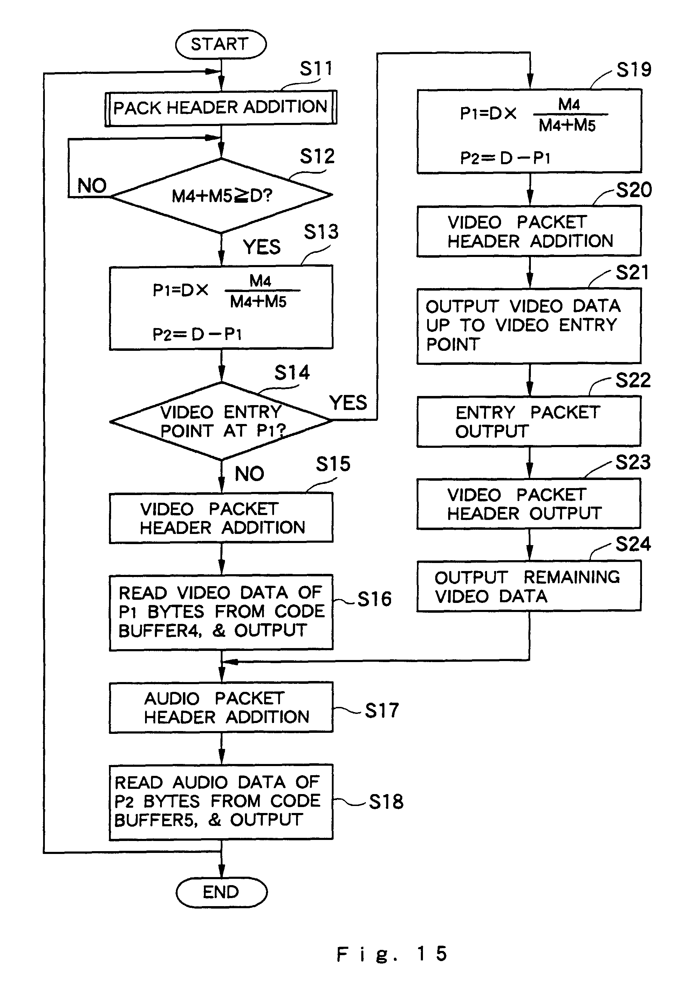

Since the video encoder 1 and the audio encoder 2 encode the video signal and the audio signal, respectively, at a variable rate, the control circuit 8 causes the multiplexer 6 to include a total of 2,048 bytes in each pack. To achieve this, the control circuit 8 controls header addition, signal reading from the signal buffers 4 and 5, and entry packet insertion using an algorithm such as that shown, for example, in Figure 15.

Similar to the processing shown in Figure 5, M4 represents the number of bytes of video signal accumulated in the video signal buffer 4, and M5 represents the number of bytes of audio signal accumulated in the audio signal buffer 5. Further, D represents the total number of signal bytes in one pack. For simplicity, it will be assumed that D is a constant obtained by subtracting the number of bytes in the pack header, the number of bytes in the video packet header, and the number of bytes in the audio packet header from the number of bytes (2,048) in the pack. D2 represents the total number of signal bytes in a pack that includes an entry packet. D2 is obtained by subtracting the number of bytes in the entry packet and the number of bytes in the video packet header from D.

In the algorithm shown in Figure 15, in step S11, the control circuit 8 first instructs the header addition circuit 7 to generate a pack header. Then, at step S12, the control circuit 8 waits until the sum of M4 and M5 is equal to or greater than the number of signal bytes D included in one pack. In other words, the control circuit 8 waits until after the total number of signal bytes accumulated in the signal buffers 4 and 5 is equal to the number of signal bytes accommodated in one pack.

At step S13, the number of bytes P1 of video signal that will be accommodated in the pack and the number of bytes P2 of audio signal that will be accommodated in the pack are calculated in accordance with the equations set forth below. P1 and P2 are values obtained by distributing the total number of signal bytes D accommodated by the pack according to the ratio of numbers of signal bytes M4 and M5 accumulated in the respective signal buffers 4 and 5.

$$P1 = D * M4/(M4 + M5)$$

$$P2 = D - P1$$

At step S14, the control circuit 8 determines whether of not a video entry point is included in the first P1 bytes of the M4 bytes of video signal. If there is no video entry point in the video signal to be accommodated in the pack, at step S15, the control circuit 8 instructs the header addition circuit 7 to provide a video packet header. Then, at step S16, P1 bytes of video signal are transferred from the video signal buffer 4 to the DSM 10. Similarly, at step S17, the control circuit 8 instructs the header addition circuit 7 to provide an audio header, and, at step S18, P2 bytes of audio signal are transferred from the audio signal buffer 5 to the DSM 10.

If there is no video entry point in the video signal accommodated in the pack, the processing described above is then repeated. This processing is similar to the processing described above with reference to Figure 5.

If it is determined at step S14 that there is a video entry point in the video signal to be accommodated in the pack, the control circuit 8 first stores the position of the current pack in the entry point storage device 33, and execution branches to step S19. There, the number of bytes P1' of video signal and the number of bytes P2' of audio signal to be accommodated in the pack are calculated in accordance with the equations:

$$P1' = D2 * M4/(M4 + M5)$$

$$P2' = D2 - P1$$

The reason why a calculation is performed at step S19 after a similar calculation has been performed at step S13 is that the number of signal bytes the can be accommodated by the pack is reduced because an entry packet is included in the pack. P1' and P2' are values obtained by distributing the total number or signal bytes D2 accommodated by the pack according to the ratio of numbers of signal bytes M4 and M5 accumulated in the signal buffers 4 and 5.

At step S20, the header addition circuit 7 generates a video packet header and feeds it to the DSM 10. Then, at step S21, the control circuit 8 transfers the video signal up to immediately before the video entry point from the video signal buffer 4 to the DSM 10. At step S21, the entry packet generation circuit 32 generates the entry packet and feeds it to the DSM 10. However, the relative position information included in the entry packet is not written onto the DSM 10 at this step.

At step S23, the header addition circuit 7 generates a second video packet header and feeds it to the DSM 10. At step S24, the remaining video signal bytes are transferred to the DSM 10. Then, execution returns to steps S17 and S18, where the audio packet header and P2' bytes of audio signal are transferred from the audio signal buffer 5 to the DSM 10. The DSM 10 records the resulting multiplexed signal.

The algorithm shown in Figure 15 is repeated, and, when all of the signals to be recorded have been recorded, the relative position information is written into the entry packets already recorded on the DSM 10. The control circuit 8 reads out the position of each entry packet from the entry point storage device 33, and causes the positions of the three preceding entry packets and the three following entry packets to be written into each entry packet recorded on the DSM 10.

The apparatus for reproducing signals recorded by the embodiment of Figure 11 will now be described with reference to Figure 12. The header separation circuit 22 in the separation circuit 21 separates pack headers, packet headers and entry packets from the signal read out from the DSM 10 and supplies them to the control circuit 24. The remaining time-division multiplexed signal is supplied to the input terminal G of the switching circuit 23. The output terminals H1 and H2 of the switching circuit 23 are connected to the input terminals of the video decoder 25 and the audio decoder 26, respectively.

The control circuit 24 supplies each entry point it receives from the header separation circuit 22 to the entry point storage device 41, where it is stored. Since the current read position is supplied from the drive apparatus 10 to the control circuit 24, the control circuit 24 can store the position of the entry point and contents of same in a corresponding relationship to each other.

The control circuit 24 of the separation circuit 21 causes the switching circuit 23 to connect the input terminal G successively to the output terminals H1 and H2 in accordance with the stream_ID of the packet header received from the header separation circuit 22. This demultiplexes the time-division multiplexed signal received from the header separation circuit 22 and supplies the video signal to the video decoder 25 and the audio signal to the audio decoder 26.

Operation of the multiplexed signal reproducing apparatus shown in Figure 12 during a search operation will now be described. In response to a search command, the main control apparatus (not shown) instructs the control circuit 24, the video decoder 25, and the audio decoder 26 to transition into search mode. The control circuit 24 reads the current read position from the DSM 10, and extracts entry points around the current read position from the entry point storage device 41. The entry point information in the entry packets reproduced in reproduction mode are continuously stored in the entry point storage device 41. Alternatively, the entry point information in all entry packets recorded on DSM 10, or the entry point information in a predetermined range of entry packets may be read out and stored in the entry point storage device 41 at predetermined times, such as when the apparatus is first switched on, when a disk is mounted in the DSM 10, or in response to a reproduce instruction.

When the control circuit 24 determines an entry point location, it sends a search instruction to the DSM 10 to move the read position at high speed to the DSM 10 to move the read position at high speed to the position of the entry point. When the movement is completed, the DSM 10 begins reproducing at the entry point, and supplies the reproduced signal to the separation circuit 21. As described above with reference to Figure 13, an entry packet is disposed immediately before the video signal of an I-picture. Accordingly, if the video signal following the entry packet is separated by the header separation circuit 22 and supplied to the video decoder 25, then the first picture of the video signal is an I-picture. The video decoder 25 immediately decodes the I-picture and feeds it to the video output outputs. The audio decoder 26 is muted in search mode.

Since the positions of the three preceding entry points and three following entry points are recorded in each entry packet, the control circuit 24 uses the position information of the next entry packet written in the present entry packet to move the read position to the next entry packet, which it then reproduces. By repeating this process, a rapid succession of I-pictures is reproduced.

The control circuit 24 causes the read position to jump to a more distant entry point when the rate of search is high, but causes the read position to jump to a closer entry point when the rate of search is low. Since the positions of three entry points are recorded in each of the forward direction and the reverse direction, three or more variations in the search rate are available depending upon combinations of entry point positions selected.

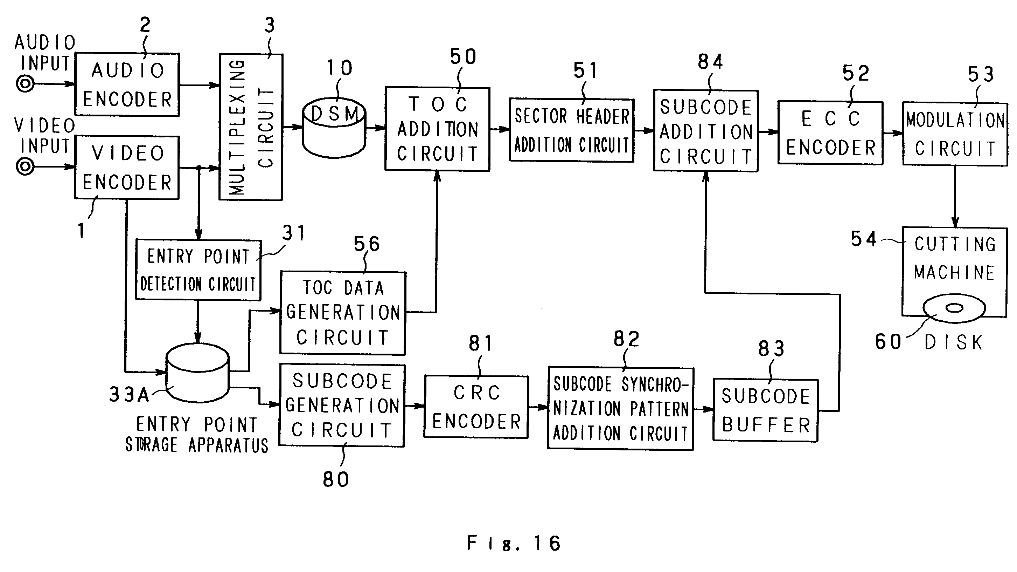

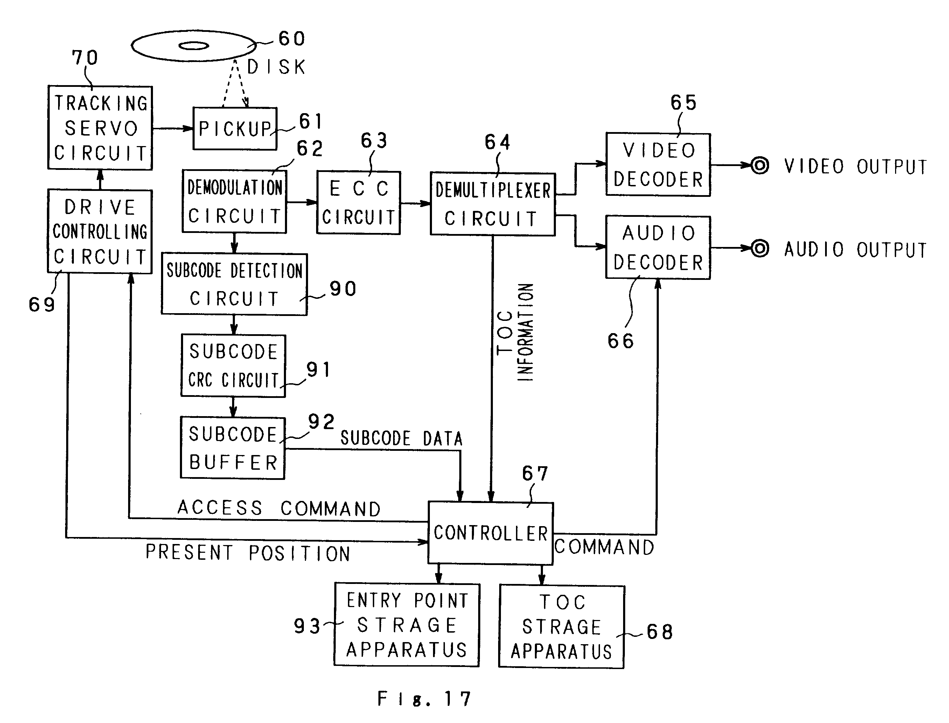

Figures 16 and 17 are block diagrams showing the construction of another embodiment of the multiplexed signal recording apparatus and the multiplexed signal recording apparatus of the present invention. Components corresponding to those in the conventional apparatus shown in figure 7 and 8 are indicated by the same reference characters.

In the recording apparatus shown in Figure 16, entry points stored in the entry point storage device 33A are fed to the TOC generation circuit 56 and to the subcode generation circuit 80. The output of the subcode generation circuit 80 is fed to the CRC encoder 81. The output of the CRC encoder 81 is fed to the subcode synchronization pattern addition circuit 82, the output of which is fed to the subcode buffer 83. The subcode addition circuit 84 multiplexes the signal received from the sector header addition circuit 51 with data received from the subcode buffer 83, and feeds the multiplexed signal to the ECC encoder 52. The construction of the rest of the circuit is similar to the conventional apparatus shown in Figure 7.

Operation of the recording apparatus shown in Figure 16 will now be described. The video signal to be recorded and the audio signal to be recorded are compressed and multiplexed, the multiplexed signal is recorded on the DSM 10, and the entry points of the video signal are stored in the entry point storage device 33A in a manner similar to that in corresponding operations in the conventional recording apparatus entry point storage device 33A and fed to the TOC generation circuit 56 to generate a TOC, and the TOC is added to the beginning of the multiplexed signal by the TOC addition circuit 50 in a manner similar to that in corresponding operations in the conventional recording apparatus shown in Figure 7.

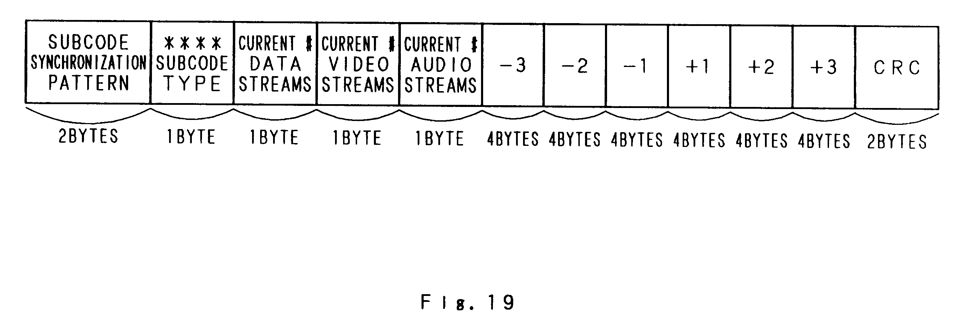

The recording apparatus according to the invention shown in Figure 16 differs from the conventional example shown in Figure 7 in that entry points are additionally fed from the entry point storage device 33A to the subcode generation circuit 80. In the present embodiment, the subcode has the format shown in Figure 19. A subcode synchronization pattern (2 bytes) is located at the beginning of the subcode. This is used so that the beginning of the subcode may be identified even if reading is started at an arbitrary sector. Following the subcode synchronization pattern is located the ****_subcode_type. This indicates the type of subcode peculiar to the parity identified by ****. A ****_subcode_type of OxFF indicates that the subcode is entry point data. Next follows current_#_data_streams, current_Q_#_video_streams, and current_#_audio_streams, which indicate the number of data streams, the number of video streams, and the number of audio streams multiplexed in the sector in which the subcode is included.

Following the current_#_audio stream are successively located entry_point_-3, entry_point_-2, entry_point_-1, entry_point_+1, entry_point_+2 and entry_point_+3. These indicate the positions of the three following entry points, in terms of the distance between the sector in which the current entry point appears on the disk 60, which will be recorded by the cutting machine 54 in a subsequent operation. Alternatively, the entry point positions may be defined in terms of absolute sector addresses on the disk 60.

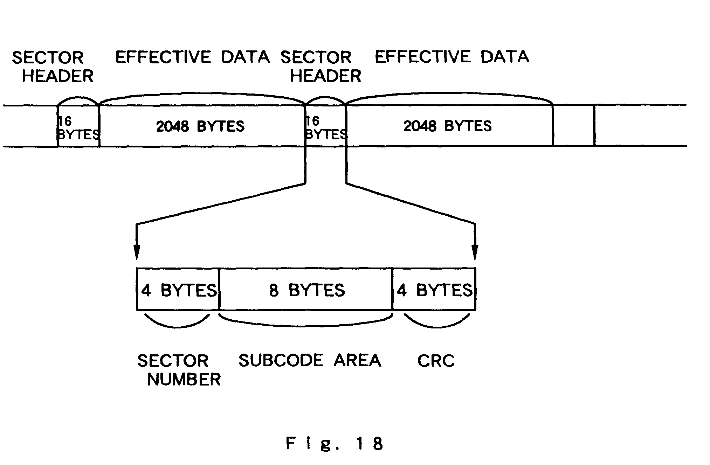

In the following description, it will be assumed that effective capacity of one sector is 2,048 bytes, and that the sector header requires an additional 16 bytes, as shown in Figure 18. The sector header includes the sector number of the sector. The sector header addition circuit 51 divides the multiplexed signal it receives from the TOC addition circuit 51 into blocks of 2,048 bytes each, and adds a sector header that are not used in the conventional apparatus are used to represent subcode in the apparatus according to the invention.

The positions of the sectors in which the three previous entry points and the three following entry points appear are read out from the entry point storage device 33A and are delivered to the subcode generation circuit 80. The subcode generation circuit 80 generates the subcode shown in Figure 19 using the entry points received from the entry point storage device 33A, and information from the controller and the user (not shown). The subcode is fed to the CRC encoder 81, which calculates a CRC code, adds the CRC code to the end of the subcode, and feeds the result to the subcode synchronization pattern addition circuit 82. The subcode synchronization pattern addition circuit 82 adds a synchronization pattern to the beginning of the subcode received form the CRC encoder 81, and feeds the resulting subcode to the subcode buffer 83.

The multiplexed signal read out from the DSM 10 via the TOC addition circuit 50 passes into the sector header addition circuit 51, which divides the multiplexed signal into blocks of 2,48 bytes and adds a sector header of 16 bytes. The sector header addition circuit 51 also writes the sector number in the sector header. The output of the sector header addition circuit 51 is fed to the subcode addition circuit 84, which reads 8 bytes of the subcode out of the subcode buffer 83, and writes them into the sector header in the subcode location therein. Since the subcode includes a total of 32 bytes and the subcode location accommodates 8 bytes, each subcode is distributed among four sectors.

The output of the subcode addition circuit 84 is fed via the ECC encoder 52 and the modulation circuit 53 to the cutting machine 54, which records the resulting modulated signal onto the optical disk master 60.

As shown in Figure 19, the positions of the three previous entry points and the three following entry points are written in the locations entry_point_-3, entry_point_-2, entry_point_-1, entry_point_+1, entry_point_+2, entry_point_+3, respectively in the subcode.

Finally, the apparatus for reproducing a disk recorded by the embodiment show in Figure 16 will be described with reference to Figure 17. The signal demodulated by the demodulation circuit 62 is fed to the ECC circuit 63, and also to the subcode detection circuit 90. The output of the subcode detection circuit 90 is fed to the subcode CRC circuit 91, which performs error detection. A Subcode for which no error has been detected is fed to the subcode buffer 92 in preparation of reading by the controller 67.

The controller 67 includes an entry point storage device 93 which stores entry points received from the subcode buffer 92 in readiness for when a search instruction is received from the user (not shown). The construction of the rest of the circuit is similar to that of the conventional embodiment shown in Figure 8.

Operation of the disk reproducing apparatus shown in Figure 17 will now be described. When the optical disk 60A is inserted into the apparatus, the controller 67 delivers a read first sector command to the drive control circuit 69. The drive control circuit 69 drives the pickup 61 via the tracking servo circuit 70 to the position of the first sector on the optical disk 60A and starts reproduction from the beginning of the first sector.

The pickup 61 illuminates the surface of the optical disk 60A with a laser beam, and reproduces the signal recorded on the disk using reflected light from the disk. The signal from the pickup 61 is fed into the demodulation circuit 62, which demodulates it. The demodulated signal is fed to the ECC circuit 63, Which performs error detection and correction. The resulting error-corrected signal is fed to the demultiplexer circuit 64.

The TOC, which is recorded in the first sector of the optical disk 60A, is separated by the demultiplexer circuit 64 and fed to the controller 67. The controller 67 causes the TOC storage device 68 to store the TOC and causes the TOC to be displayed to the user (not shown) on a display (not shown).

The controller 67, after receiving a reproduce command from the user (not shown) delivers a command to the drive control circuit 69 to start operation. The drive control circuit 69 drives the pickup 61 via the tracking servo circuit 70 to start reproduction from the position on the disk 60 indicated by the user. At the same time, the drive control circuit 69 delivers a command to the video decoder 65 and the audio decoder 66 to prepare to decode input signals.

After reading the TOC, the pickup 61 illuminates the surface of the optical disk 60A with a laser beam, and reproduces the signal recorded on the disk using reflected light from the disk. The signal from the pickup 61 is fed to the demodulation circuit 62, which performs demodulation. The demodulated signal is fed to the ECC circuit 63, which performs error detection and correction. The resulting error corrected signal is fed to the demultiplexer circuit 64.

The video signal separated by the demultiplexer 64 is fed to the video decoder 65, and the audio signal is fed to the audio decoder 66. The video signal and the audio signal, which are compressed, are expanded by the video decoder 65 and the audio decoder 66, respectively, to provide a decompressed digital video signal and a decompressed digital audio signal, respectively.

The signal from the demodulation circuit 62 is also fed to the subcode detection circuit 90. The subcode detection circuit 90 extracts the portions of subcode from the sector headers. In this example, 8 bytes of subcode are extracted from each sector header. The subcode synchronization pattern is detected in the subcode extracted from plural sector headers, and the subcode is fed into the subcode CRC circuit 91 starting with the beginning of the subcode. The CRC circuit 91 determines from the subcode it receives and CRC data therein whether there is an error in the subcode. When no error is found, the subcode is fed to the subcode buffer 92.

The controller 67 reads the entry points from the subcode buffer 92 and supplies them to the entry point storage device 93, which stores them. Since the drive control circuit supplies the current read position to the controller 92, the controller 67 can cause the positions of the entry points and contents of the entry points to be stored in a corresponding relationship to each other.

Operation of multiplexed signal reproduction apparatus shown in Figure 17 during a search now be described. When the user (not shown) enters a search command, the controller 67 instructs the video decoder 65 and the audio decoder 66 to enter into search mode. The controller 67 also reads the current read position from the output of the drive control circuit 69, and reads the positions of entry points near the current read position from the entry point storage device 93.

After the controller determined the position of the entry point from the entry points from the entry storage device, it sends a search instruction to the drive control circuit 69. The drive control circuit 69 drives the tracking servo circuit 70 to move the pickup 61 at high speed to the position of the entry point determined by the controller.

After the movement is completed, the pickup 61 starts reproducing from the entry point and feeds the reproduced signal to the demodulation circuit 62. The demodulated signal is supplied to the video decoder 65, via the ECC circuit 63 and the demultiplexer circuit 64, and the subcode portion is separated from the demodulated signal by the subcode detection circuit 90, the subcode CRC circuit 91, and the subcode buffer 92. The resulting subcode is fed to the controller 67 for use.

Since pickup 61 starts reproduction at an entry point, the first picture of the video signal supplied to the video decoder 65 is an I-picture. The video decoder 65 immediately decode the I-picture, and feeds it to the video output. The audio decoder 66 is muted in search mode.

Since the positions of the previous three entry points and the following three entry points relative to the current position of the pickup are recorded in the subcode reproduced from the current position, the controller 67 uses the reproduced position information to cause the pickup to jump to next entry point, and repeats the sequence of jumping to the next entry point and reproducing the I-picture from the disk starting at the next entry point. The results in a rapid succession of I-picture being reproduced from the disk.

The controller 67 causes the pickup 61 to jump to a more distant entry point when the rate of search in high, and causes the pickup 61 to jump to a closer entry point when the rate of search is low. Since three entry points are stored for each of the forward direction and the reverse direction, three or more variations in search rate can be obtained by selecting different combinations of entry points.

Subsequently, another embodiment of data decoding method of the present invention will be described. The apparatus used in the present embodiment is the multiplexed data decoding apparatus of Fig. 12. When an instruction of a searching operation is developed, the main control apparatus not shown instructs the control apparatus 24, the video decoder 25 and the audio decoder 26 to enter into a search mode. (In the search mode, the audio decoder 26 is kept in a mute condition.)

In the search mode, the control apparatus 24 instructs the DSM 10 of a command to move the read position of data on the disk forwardly (or rearwardly). While the amount of movement of the read position then depends upon the searching rate, the coding rate and so forth, generally the amount of movement increases as the coding rate increases. When the read position moves to predetermined a predetermined position, data outputted from the DSM 10 are inputted to the separation apparatus 21. The header separation circuit 22 separates video data and supplies them to the video decoder 25.

Here, if it is assumed that the constitution of pictures in one GOP is

IBBIBBPBBPBBPBBP I, then the order is changed for decoding on a bit stream to

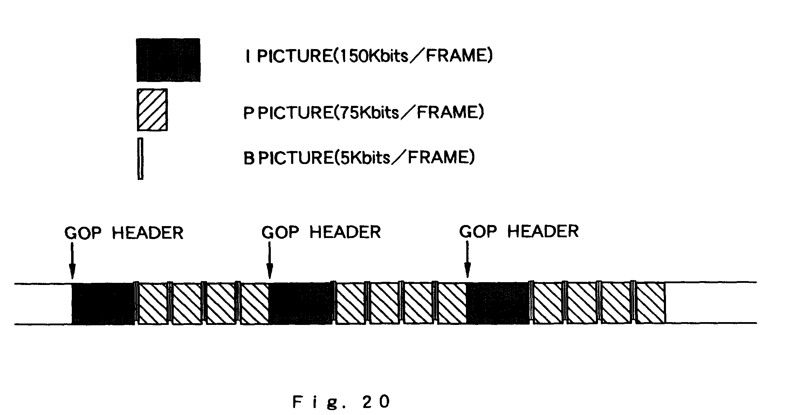

IIBBPBBPBBPBBPBB I as shown in Fig. 20. This conforms to the allocation of bit number for individual pictures described in the conventional example described hereinabove.

In the embodiment of the present invention, the video decoder 25 reads an I-picture which appears first and two B-pictures, one P-picture and further two B-pictures succeeding to the I-picture, and decodes, that is, decodes, and outputs them. Consequently, since decoding of the I, B, B and P-pictures except the first two B-pictures is possible, four moving pictures can be outputted by one access.

When the position of an I-picture is known from the information of the subcode/ the private packet or the like, searching for an I-picture is performed by the DSM 10 using the information, and six successive pictures are read in similarly as described above.

In such embodiment of the present invention as described above, the time required for one searching operation will be estimated. When the DSM 10 is regarded as a CD-ROM drive, the time is a sum of the following parameters.

Head seek time: M (depending upon the mechanical structure)

Servo settling time: N (depending upon a servo circuit)

Maximum rotation waiting time: about 300 milliseconds or so at an outer circumference of compact disk

Data read time: 245 milliseconds or so for 6 pictures

Since the time relates to searching operation for an adjacent I-picture, it is forecast that, of the parameters given above, the head seek time M and the servo settling time N are very short comparing with the rotation waiting time, and accordingly, they are ignored. As a result, it is considered that the period of the variation in picture is about 545 milliseconds in the maximum. Reading of the six I, B, B, P, B and B-pictures then requires $(150 + 75 + 4 * 5)/ 1,000 = 245$ milliseconds.

According to the present embodiment, the variation of about 8 pictures or so can be obtained for one second. Consequently, the psychological waiting time of the user can be reduced.

It is to be noted that, while, in the present embodiment, the data to be read out upon searching are described being 6 successive pictures beginning with an I-picture, a similar effect can be obtained by reading out two or more pictures including an I-picture. Also the algorithm wherein a predetermined amount of data are read into the video code buffer may be available.

Although illustrative embodiments of the invention have been described herein in detail, it is to be understood that the invention is not limited to the precise embodiments described, and that various modifications may be practiced within the scope of the invention defined by the appended claims.

## Claims

1. Apparatus for successively reproducing portions of a multiplexed signal recorded on a recording medium to effect a high-speed search, the multiplexed signal including a variable-rate coded signal and signal-type markers identifying signal portions of a predetermined type in the variable-rate coded signal, the apparatus comprising:

   reproducing means for reproducing a portion of the multiplexed signal from a read position on the recording medium;
   demultiplexing means for demultiplexing the variable-rate coded signal and a signal-type marker from the portion of the multiplexed signal; and
   control means for changing the read position in response to the signal-type marker.

2. The apparatus of claim 1, wherein:

   the signal-type marker includes location information indicating a location on the recording medium of an additional signal-type marker; and
   the control means changes the read position in response to the location information in the signal-type marker.

3. The apparatus of claim 2, wherein:

   the control means includes means for extracting the location information from the signal-type marker;
   the control means changes the read position to a new read position indicated by the location information; and
   the reproducing means reproduces the multiplexed signal including the additional signal-type marker from the new read position.

4. The apparatus of claim 3, wherein:

   the signal-type marker includes location information indicating locations on the recording medium of plural additional signal-type markers successively preceding and following the signal-type marker;
   the control means includes means for selecting from the location information the location of one of the plural additional signal-type markers in response to a desired rate of search; and
   the control means changes the read position to a new read position indicated by the selected location.

5. The apparatus of claim 12, wherein:

   the apparatus additionally comprises:
   storage means for storing the location information included in the signal-type marker, and
   means, operating in response to a search command, for reading the location information from the storage means; and
the control means changes the read position in response to the location information read from the storage means.

6. The apparatus of claim 2, wherein:

the signal portion of the predetermined type is an expandable portion of the variable-rate coded signal, and an expandable portion of the variable-rate coded signal immediately follows each signal-type marker in the multiplexed signal;
at each read position, the portion of the multiplexed signal reproduced by the reproducing means includes a signal-type marker and an expandable portion of the variable-rate coded signal; and
the apparatus additionally includes means for expanding the expandable portion of the variable-rate coded signal extracted from the reproduced multiplexed signal by the demultiplexer, and for providing the expanded expandable portion as an output signal.

7. The apparatus of claim 16, wherein:

the control means includes means for extracting the location information from the signal-type marker reproduced from the read position on the recording medium;
the control means changes the read position to a new read position indicated by the location information in the signal-type marker reproduced at the read position; and
the reproducing means reproduces from the new read position a portion of the multiplexed signal including an additional signal-type marker, including location information, and an expandable portion of the variable-rate coded signal; and
the expanding means provides an output signal from each read position.

8. The apparatus of claim 2, wherein:

the variable-rate coded signal includes a video signal including plural pictures, each picture being compressed in one of an intra-picture mode and an inter-picture mode; and
a signal-type marker immediately precedes each picture compressed in the intra-picture mode.

9. The apparatus of claim 1, wherein the signal-type marker is included in a packet of a predetermined type.

10. The apparatus of claim 9, wherein, in the multiplexed signal, the packet of the predetermined type immediately precedes the signal portion of the predetermined type.

11. The apparatus of claim 9, wherein:

the variable-rate coded signal includes a video signal including plural pictures, each picture being compressed in one of an intra-picture mode and an inter-picture mode; and
the packet of a predetermined type is an entry packet and immediately precedes each picture compressed in the intra-picture mode.

12. The apparatus of claim 1, wherein the signal-type marker is included in subcode.

13. The apparatus of claim 12, wherein:

in the multiplexed signal, the variable-rate coded signal is divided into plural sectors, each sector beginning with a sector header; and
the subcode is located in the sector header of a sector accommodating the signal portion of the predetermined type.

14. The apparatus of claim 13, wherein, in the multiplexed signal, the subcode is distributed among the sector headers of plural consecutive sectors accommodating the signal portion of the predetermined type.

15. The apparatus of claim 12, wherein:

the variable-rate coded signal includes a video signal including plural pictures, each picture being compressed in one of an intra-picture mode and an inter-picture mode; and
the subcode is distributed among the sector headers of plural consecutive sectors accommodating a picture compressed in the intra-picture mode.

16. Method of successively reproducing portions of a multiplexed signal recorded on a recording medium to effect a high-speed search, the multiplexed signal including a variable-rate coded signal and signal-type markers identifying signal portions of a predetermined type in the variable-rate coded signal, the method comprising repeating the steps of:

reproducing a portion of the multiplexed signal from a read position on the recording medium;
demultiplexing the variable-rate coded signal and a signal-type marker from the reproduced portion of the multiplexed signal; and
changing the read position in response to the signal-type marker.

17. The method of claim 16, wherein:

the signal-type marker includes location information indicating a location on the recording medium of an additional signal-type marker; and
the step of changing the read position changes the read position in response to the location information in the signal-type marker.

18. The method of claim 17, wherein:

the step of changing the read position includes the step of extracting the location information from the signal-type marker;
in the step of changing the read position, the read position is changed to a new read position indicated by the location information; and
in the reproducing step, the portion of the multiplexed signal reproduced from the new read position includes the additional signal-type marker.

19. The method of claim 18, wherein:

the signal-type marker includes location information indicating locations on the recording medium of plural additional signal-type markers successively preceding and following the signal-type marker;
the step of changing the read position additionally includes the step of selecting from the location information the location of one of the plural additional signal-type markers in response to a desired rate of search; and
the step of changing the read position changes the read position to a new read position indicated by the selected location.

20. The method of claim 17, wherein:

the method additionally comprises the steps of: providing a storage device,
storing the location information included in the signal-type marker in the storage device, and
in response to a search command, reading from the search device the stored location information; and
the step of changing the read position changes the read position in response to the location information read from the storage device.

21. The method of claim 17, wherein:

an expandable portion of the variable-rate coded signal immediately follows each signal-type marker in the multiplexed signal;
the step of reproducing a portion of the multiplexed signal reproduces a portion of the multiplexed signal includes a signal-type marker and an expandable portion of the variable-rate coded signal; and
the method additionally includes the steps of:
expanding the expandable portion of the variable-rate coded signal demultiplexed from the reproduced portion of the multiplexed signal, and
providing the expanded expandable portion as an output signal.

22. The method of claim 21, wherein:

the step of changing the read position includes the step of extracting the location information from the signal-type marker;
the step of changing the read position changes the read position to a new read position indicated by the location information in the signal-type marker;
the reproducing step reproduces from the new read position a portion of the multiplexed signal including an additional signal-type marker including additional location information, and an expandable portion of the variable-rate coded signal; and
after each repetition of the step of changing the read position, the step of expanding the expandable portion provides an output signal.

23. The method of claim 21, wherein, in the multiplexed signal:

the variable-rate coded signal includes a video signal including plural pictures, each picture being compressed in one of an intra-picture mode and an inter-picture mode; and
a signal-type marker immediately precedes each picture compressed in the intra-picture mode.

24. The method of claim 16, wherein, in the multiplexed signal, the signal-type marker is included in a packet of a predetermined type.

25. The method of claim 24, wherein, in the multiplexed signal, the packet of the predetermined type immediately precedes the signal portion of the predetermined type.

26. The method of claim 24, wherein, in the multiplexed signal:

the variable-rate coded signal includes a video signal including plural pictures, each picture being compressed in one of an intra-picture mode and an inter-picture mode; and
the packet of a predetermined type is an entry packet and immediately precedes each picture compressed in the intra-picture mode.

27. The method of claim 16, wherein, in the multiplexed signal, the signal-type marker is included in subcode.

28. The method of claim 27, wherein, in the multiplexed signal:

the variable-rate coded signal is divided into plural sectors, each sector beginning with a sector header; and
the subcode is located in the sector header of a sector including the signal portion of the predetermined type.

29. The method of claim 28, wherein, in the multiplexed signal, the subcode is distributed among the sector headers of plural consecutive sectors accommodating the signal portion of the predetermined type.

**Patentansprüche**

1. Vorrichtung zum aufeinanderfolgenden Wiedergeben von Teilen eines gemultiplexten Signals, das auf einem Aufzeichnungsmedium aufgezeichnet ist, um eine Hochgeschwindigkeitssuche zu bewirken, wobei das gemultiplexte Signal ein mit variabler Rate codiertes Signal und Signalart-Markierer, die Signal-Teile einer vorbestimmten Art in dem mit variabler Rate codierten Signal kennzeichnen, enthält, welche Vorrichtung umfaßt:

ein Wiedergabemittel zum Wiedergeben eines Teils des gemultiplexten Signals aus einer Leseposition auf dem Aufzeichnungsmedium,
ein Demultiplexer-Mittel zum Demultiplexen des mit variabler Rate codierten Signals und eines Signalart-Markierers aus dem Teil des gemultiplexten Signals und
ein Steuermittel zum Ändern der Leseposition in Reaktion auf den Signalart-Markierer.

2. Vorrichtung nach Anspruch 1, wobei

der Signalart-Markierer Ortsinformation enthält, die einen Ort eines zusätzlichen Signalart-Markierers auf dem Aufzeichnungsmedium anzeigt, und
das Steuermittel die Leseposition in Reaktion auf die Ortsinformation in dem Signalart-Markierer ändert.

3. Vorrichtung nach Anspruch 2, in der

das Steuermittel ein Mittel zum Herausziehen der Ortsinformation aus dem Signalart-Markierer enthält,
das Steuermittel die Leseposition in eine neue Leseposition ändert, die durch die Ortsinformation angezeigt wird, und
das Wiedergabemittel das gemultiplexte Signal wiedergibt, welches den zusätzlichen Signalart-Markierer aus der neuen Leseposition anzeigt.

4. Vorrichtung nach Anspruch 3, wobei

der Signalart-Markierer Ortsinformation enthält, die Orte mehrerer zusätzlicher Signalart-Markierer auf dem Aufzeichnungsmedium anzeigt, welche nacheinander dem Signalart-Markierer vorangehen und folgen,
das Steuermittel ein Mittel zum Auswählen der Ortsinformation betreffend den Ort eines der mehreren zusätzlichen Signalart-Markierer in Reaktion auf eine gewünschte Suchrate enthält und
das Steuermittel die Leseposition in eine neue Lese-position ändert, die durch den ausgewählten Ort ange-zeigt wird.

5. Vorrichtung nach Anspruch 2, wobei die Vorrichtung zusätzlich

ein Speichermittel zum Speichern der Ortsinformation, die in dem Signalart-Markierer enthalten ist, und
ein Mittel, das in Reaktion auf einen Suchbefehl arbeitet, zum Auslesen der Ortsinformation aus dem Spei-chermittel umfaßt und
das Steuermittel die Leseposition in Reaktion auf die Ortsinformation, welche aus dem Spei-chermittel ausgelesen ist, ändert.

6. Vorrichtung nach Anspruch 2, wobei

der Signal-Teil der vorbestimmten Art ein erweiterbarer Teil des mit variabler Rate codierten Signals ist und ein erweiterbarer Teil des mit variabler Rate codierten Signals unmittelbar jedem Signalart-Markierer in dem gemultiplexten Signal folgt,
in jeder Leseposition der Teil des gemultiplexten Signals, der durch das Wiedergabemittel wiedergegeben ist, einen Signalart-Markierer und einen erweiterbaren Teil des mit variabler Rate codierten Signals enthält und
die Vorrichtung zusätzlich ein Mittel zum Erweitern des erweiterbaren Teils des mit variabler Rate codierten Signals, der durch den Demultiplexer aus dem wiedergegebenen gemultiplexten Signal herausgezogen ist, und zum Bereitstellen des erweiterten erweiterbaren Teils als ein Ausgangssignal enthält.

7. Vorrichtung nach Anspruch 6, in der

das Steuermittel ein Mittel zum Herausziehen der Ortsinformation aus dem Signalart-Markierer enthält, der aus der Leseposition auf dem Aufzeichnungsmedium wiedergegeben ist, das Steuermittel die Leseposition in eine neue Leseposition ändert, welche durch die Ortsinformation in dem Signalart-Markierer, der in der Leseposition wiedergegeben ist, angezeigt wird, das Wiedergabemittel aus der neuen Leseposition einen Teil des gemultiplexten Signals, der einen zusätzlichen Signalart-Markierer enthält, welcher Ortsinformation enthält, und einen erweiterbaren Teil des mit variabler Rate codierten Signals wiedergibt und das Erweiterungs-Mittel in Ausgangssignal aus jeder Leseposition bereitstellt.

8. Vorrichtung nach Anspruch 2, wobei

das mit variabler Rate codierte Signal ein Video-Signal enthält, das mehrere Bilder enthält, wobei jedes Bild in einer von einer Innerbild-Betriebsart und einer Zwischenbild-Betriebsart komprimiert ist, und jedem Bild, das in der Innerbild-Betriebsart komprimiert ist, unmittelbar ein Signalart-Markierer vorangeht.

9. Vorrichtung nach Anspruch 1, wobei der Signalart-Markierer in einem Datenpaket einer vorbestimmten Art enthalten ist.

10. Vorrichtung nach Anspruch 9, wobei in dem gemultiplexten Signal das Datenpaket der vorbestimmten Art unmittelbar dem Signal-Teil der vorbestimmten Art vorangeht.

11. Vorrichtung nach Anspruch 9, wobei

das mit variabler Rate codierte Signal ein Video-Signal enthält, das mehrere Bilder enthält, wobei jedes Bild in einer von einer Innerbild-Betriebsart und einer Zwischenbild-Betriebsart komprimiert ist und das Datenpaket einer vorbestimmten Art ein Eingangs-Datenpaket ist und jedem Bild, das in der Innerbild-Betriebsart komprimiert ist, unmittelbar vorangeht.

12. Vorrichtung nach Anspruch 1, wobei der Signalart-Markierer in einem Subcode enthalten ist.

13. Vorrichtung nach Anspruch 12, wobei

in dem gemultiplexten Signal das mit variabler Rate codierte Signal in mehrere Sektoren unterteilt ist, wobei jeder Sektor mit einem Sektor-Vorsatz (-Header) beginnt, und sich der Subcode in dem Sektor-Vorsatz eines Sektors befindet, welcher den Signal-Teil der vorbestimmten Art aufnimmt.

14. Vorrichtung nach Anspruch 13, wobei in dem gemultiplexten Signal der Subcode auf die Sektor-Vorsätze mehrerer aufeinanderfolgender Sektoren verteilt ist, die den Signal-Teil der vorbestimmten Art aufnehmen.

15. Vorrichtung nach Anspruch 12, wobei

das mit variabler Rate codierte Signal ein Video-Signal enthält, das mehrere Bilder enthält, wobei jedes Bild in einer von einer Innerbild-Betriebsart und einer Zwischenbild-Betriebsart komprimiert ist, und der Subcode auf die Sektor-Vorsätze mehrerer aufeinanderfolgender Sektoren verteilt ist, die ein Bild aufnehmen, das in der Innerbild-Betriebsart komprimiert ist.

16. Verfahren zum aufeinanderfolgenden Wiedergeben von Teilen eines gemultiplexten Signals, das auf einem Aufzeichnungsmedium aufgezeichnet, um eine Hochgeschwindigkeitssuche zu bewirken, wobei das gemultiplexte Signal ein mit variabler Rate codiertes Signal und Signalart-Markierer, die Signal-Teile einer vorbestimmten Art in dem mit variabler Rate codierten Signal kennzeichnen, enthält, welches Verfahren das Wiederholen von Schritten enthält zum

Wiedergeben eines Teils des gemultiplexten Signals aus einer Leseposition auf dem Aufzeichnungsmedium, Demultiplexen des mit variabler Rate codierten Signals und eines Signalart-Markierers aus dem wiedergegebenen Teil des gemultiplexten Signals und Ändern der Leseposition in Reaktion auf den Signalart-Markierer.

17. Verfahren nach Anspruch 16, bei dem

der Signalart-Markierer Ortsinformation enthält, die einen Ort eines zusätzlichen Signalart-Markierers auf dem Aufzeichnungsmedium anzeigt, und der Schritt zum Ändern der Leseposition die Leseposition in Reaktion auf die Ortsinformation in dem Signalart-Markierer ändert.

18. Verfahren nach Anspruch 17, bei dem

der Schritt zum Ändern der Leseposition den Schritt zum Herausziehen der Ortsinformation aus dem Signalart-Markierer enthält, in dem Schritt zum Ändern der Leseposition die Leseposition in eine neue Leseposition geändert wird, die durch die Ortsinformation angezeigt wird, und in dem Wiedergabe-Schritt der Teil des gemultiplexten Signals, welcher aus der neuen Leseposition wiedergegeben ist, den zusätzlichen Signalart-Markierer enthält.

19. Verfahren nach Anspruch 18, bei dem

der Signalart-Markierer Ortsinformation enthält, die Orte mehrerer zusätzlicher Signalart-Markierer auf dem Aufzeichnungsmedium anzeigt, welche dem Signalart-Markierer aufeinanderfolgend vorangehen und folgen, der Schritt zum Ändern der Leseposition zusätzlich den Schritt zum Auswählen des Orts eines der mehreren zusätzlichen Signalart-Markierer aus der Ortsinformation in Reaktion auf eine gewünschte Suchrate enthält und der Schritt zum Ändern der Leseposition die Leseposition in eine neue Leseposition ändert, die durch den ausgewählten Ort angezeigt wird.

20. Verfahren nach Anspruch 17, wobei das Verfahren zusätzlich Schritte umfaßt zum

Vorsehen einer Speichereinrichtung, Speichern der Ortsinformation, die in dem Signalart-Markierer in der Speichereinrichtung enthalten ist, und Auslesen der gespeicherten Ortsinformation aus der Sucheinrichtung in Reaktion auf einen Suchbefehl und wobei der Schritt zum Ändern der Leseposition die Leseposition in Reaktion auf die Ortsinformation, welche aus der Speichereinrichtung ausgelesen ist, ändert.

21. Verfahren nach Anspruch 17, bei dem

ein erweiterbarer Teil des mit variabler Rate codierten Signals unmittelbar jedem Signalart-Markierer in dem gemultiplexten Signal folgt, der Schritt zum Wiedergeben eines Teils des gemultiplexten Signals einen Teil des gemultiplexten Signals wiedergibt, der einen Signalart-Markierer und einen erweiterbaren Teil des mit variabler Rate codierten Signals enthält, und wobei das Verfahren zusätzlich die Schritte enthält zum Erweitern des erweiterbaren Teils des mit variabler Rate codierten Signals, das durch Demultiplexen aus dem wiedergegebenen Teil des gemultiplexten Signals gewonnen ist, und Bereitstellen des erweiterten erweiterbaren Teils als ein Ausgangssignal.

22. Verfahren nach Anspruch 21, bei dem

der Schritt zum Ändern der Leseposition den Schritt zum Herausziehen der Ortsinformation aus dem Signalart-Markierer enthält, der Schritt zum Ändern der Leseposition die Leseposition in eine neue Leseposition ändert, die durch die Ortsinformation in dem Signalart-Markierer angezeigt wird, der Wiedergabe-Schritt aus der neuen Leseposition einen Teil des gemultiplexten Signals, der einen zusätzlichen Signalart-Markierer enthält, welcher zusätzliche Ortsinformation enthält, und einen erweiterbaren Teil des mit variabler Rate codierten Signals wiedergibt und nach jeder Wiederholung des Schritts zum Ändern der Leseposition der Schritt zum Erweitern des erweiterbaren Teils ein Ausgangssignal bereitstellt.

23. Verfahren nach Anspruch 21, bei dem in dem gemultiplexten Signal

das mit variabler Rate codierte Signal ein Video-Signal enthält, das mehrere Bilder enthält, wobei jedes Bild in einer von einer Innerbild-Betriebsart und einer Zwischenbild-Betriebsart komprimiert ist, und jedem Bild, das in der Innerbild-Betriebsart komprimiert ist, unmittelbar ein Signalart-Markierer vorangeht.

24. Verfahren nach Anspruch 16, bei dem in dem gemultiplexten Signal der Signalart-Markierer in einem Datenpaket einer vorbestimmten Art enthalten ist.

25. Verfahren nach Anspruch 24, bei dem in dem gemultiplexten Signal das Datenpaket der vorbestimmten Art dem Signal-Teil der vorbestimmten Art unmittelbar vorangeht.

26. Verfahren nach Anspruch 24, bei dem in dem gemultiplexten Signal

das mit variabler Rate codierte Signal ein Video-Signal enthält, das mehrere Bilder enthält, wobei jedes Bild in einer von einer Innerbild-Betriebsart und einer Zwischenbild-Betriebsart komprimiert ist, und

das Datenpaket einer vorbestimmten Art ein Eingangs-Datenpaket ist und jedem Bild, das in der Innerbild-Betriebsart komprimiert ist, unmittelbar vorangeht.

27. Verfahren nach Anspruch 16, bei dem in dem gemultiplexten Signal der Signalart-Markierer in einem Subcode enthalten ist.

28. Verfahren nach Anspruch 27, bei dem in dem gemultiplexten Signal

das mit variabler Rate codierte Signal in mehrere Sektoren unterteilt ist, wobei jeder Sektor mit einem Sektor-Vorsatz beginnt, und sich der Subcode in dem Sektor-Vorsatz eines Sektors befindet, welcher den Signal-Teil der vorbestimmten Art enthält.

29. Verfahren nach Anspruch 28, bei dem in dem gemultiplexten Signal der Subcode auf die Sektor-Vorsätze mehrerer aufeinanderfolgender Sektoren verteilt ist, die den Signal-Teil der vorbestimmten Art aufnehmen.

## Revendications

1. Appareil pour reproduire successivement des parties d'un signal multiplexé qui est enregistré sur un support d'enregistrement, pour effectuer une recherche rapide, le signal multiplexé comprenant un signal codé à débit variable et des marqueurs de type de signal identifiant des parties de signal d'un type prédéterminé dans le signal codé à débit variable, l'appareil comprenant :

des moyens de reproduction pour reproduire une partie du signal multiplexé, à partir d'une position de lecture sur le support d'enregistrement;
des moyens de démultiplexage pour démultiplexer le signal codé à débit variable et un marqueur de type de signal, à partir de la partie du signal multiplexé; et
des moyens de commande pour changer la position de lecture sous l'effet du marqueur de type de signal.

2. L'appareil de la revendication 1, dans lequel :

le marqueur de type de signal comprend une information de position indiquant une position sur le support d'enregistrement d'un marqueur de type de signal supplémentaire; et
les moyens de commande changent la position de lecture sous l'effet de l'information de position dans le marqueur de type de signal.

3. L'appareil de la revendication 2, dans lequel :

les moyens de commande comprennent des moyens pour extraire l'information de position à partir du marqueur de type de signal;
les moyens de commande changent la position de lecture pour la remplacer par une nouvelle position de lecture indiquée par l'information de position; et
les moyens de reproduction reproduisent le signal multiplexé comprenant le marqueur de type de signal supplémentaire, à partir de la nouvelle position de lecture.

4. L'appareil de la revendication 3, dans lequel :

le marqueur de type de signal comprend une information de position indiquant des positions sur le support d'enregistrement de plusieurs marqueurs de type de signal supplémentaires qui précédent et suivent successivement le marqueur de type de signal;
les moyens de commande comprennent des moyens pour sélectionner à partir de l'information de position, la position d'un marqueur parmi les plusieurs marqueurs de type de signal supplémentaires, sous la dépendance d'une vitesse de recherche désirée; et
les moyens de commande changent la position de lecture pour la remplacer par une nouvelle position de lecture qui est indiquée par la position sélectionnée.

5. L'appareil de la revendication 2, dans lequel :

l'appareil comprend en outre :
des moyens d'enregistrement pour enregistrer l'information de position qui est incluse dans le marqueur de type de signal, et
des moyens, fonctionnant sous l'effet d'un ordre de recherche, pour lire l'information de position dans les moyens d'enregistrement; et
les moyens de commande changent la position de lecture sous l'effet de l'information de position qui est lue dans les moyens d'enregistrement.

6. L'appareil de la revendication 2, dans lequel :

la partie de signal du type prédéterminé est une partie se prêtant à la décompression dans le signal codé à débit variable, et une partie se prêtant à la décompression dans le signal codé à débit variable suit immédiatement chaque marqueur de type de signal dans le signal multiplexé;

à chaque position de lecture, la partie du signal multiplexé qui est reproduite par les moyens de reproduction comprend un marqueur de type de signal et une partie se prêtant à la décompression dans le signal codé à débit variable; et l'appareil comprend en outre des moyens pour décompresser la partie se prêtant à la décompression dans le signal codé à débit variable, qui est extraite par le multiplexeur du signal multiplexé reproduit, et pour fournir à titre de signal de sortie la partie se prêtant à la décompression qui a été décompressée.

7. L'appareil de la revendication 6, dans lequel :

les moyens de commande comprennent des moyens pour extraire l'information de position à partir du marqueur de type de signal qui est reproduit à partir de la position de lecture sur le support d'enregistrement;
les moyens de commande changent la position de lecture pour la remplacer par une nouvelle position de lecture indiquée par l'information de position dans le marqueur de type de signal qui est reproduit à la position de lecture; et
les moyens de reproduction reproduisent à partir de la nouvelle position de lecture une partie du signal multiplexé comprenant un marqueur de type de signal supplémentaire, contenant une information de position, et une partie se prêtant à la décompression dans le signal codé à débit variable; et
les moyens de décompression fournissent un signal de sortie à partir de chaque position de lecture.

8. L'appareil de la revendication 2, dans lequel :

le signal codé à débit variable comprend un signal vidéo comportant plusieurs images, chaque image étant compressée dans un mode parmi un mode intra-image et un mode inter-image; et
un marqueur de type de signal précède immédiatement chaque image compressée dans le mode intra-image.

9. L'appareil de la revendication 1, dans lequel le marqueur de type de signal est inclus dans un paquet d'un type prédéterminé.

10. L'appareil de la revendication 9, dans lequel, dans le signal multiplexé, le paquet du type prédéterminé précède immédiatement la partie de signal du type prédéterminé.

11. L'appareil de la revendication 9, dans lequel :

le signal codé à débit variable comprend un signal vidéo comportant plusieurs images, chaque image étant compressée dans un mode parmi un mode intra-image et un mode inter-image; et
le paquet d'un type prédéterminé est un paquet d'entrée et il précède immédiatement chaque image compressée dans le mode intra-image.

12. L'appareil de la revendication 1, dans lequel le marqueur de type de signal est inclus dans un sous-code.

13. L'appareil de la revendication 12, dans lequel :

dans le signal multiplexé, le signal codé à débit variable est divisé en plusieurs secteurs, chaque secteur commençant par un en-tête de secteur; et
le sous-code est placé dans l'en-tête de secteur d'un secteur qui contient la partie de signal du type prédéterminé.

14. L'appareil de la revendication 13, dans lequel, dans le signal multiplexé, le sous-code est réparti parmi les en-têtes de secteur de plusieurs secteurs consécutifs contenant la partie de signal du type prédéterminé.

15. L'appareil de la revendication 12, dans lequel :

le signal codé à débit variable comprend un signal vidéo comportant plusieurs images, chaque image étant compressée dans un mode parmi un mode intra-image et un mode inter-image; et
le sous-code est réparti parmi les en-têtes de secteur de plusieurs secteurs consécutifs contenant une image compressée dans le mode intra-image.

16. Procédé pour reproduire successivement des parties d'un signal multiplexé qui est enregistré sur un support d'enregistrement, pour effectuer une recherche rapide, le signal multiplexé comprenant un signal codé à débit variable et des marqueurs de type de signal identifiant des parties de signal d'un type prédéterminé dans le signal codé à débit variable, le procédé comprenant la répétition des étapes suivantes :

on reproduit une partie du signal multiplexé, à partir d'une position de lecture sur le support d'enregistrement;
on démultiplexe le signal codé à débit variable et un marqueur de type de signal, à partir de la partie reproduite du signal multiplexé; et
on change la position de lecture sous l'effet du marqueur de type de signal.

**17.** Le procédé de la revendication 16, dans lequel :

le marqueur de type de signal comprend une information de position indiquant une position sur le support d'enregistrement d'un marqueur de type de signal supplémentaire; et
l'étape de changement de la position de lecture change la position de lecture sous la dépendance de l'information de position dans le marqueur de type de signal.

**18.** Le procédé de la revendication 17, dans lequel :

l'étape de changement de la position de lecture comprend l'étape d'extraction de l'information de position à partir du marqueur de type de signal;
dans l'étape de changement de la position de lecture, la position de lecture est changée pour être remplacée par une nouvelle position de lecture qui est indiquée par l'information de position; et
dans l'étape de reproduction, la partie du signal multiplexé qui est reproduite à partir de la nouvelle position de lecture contient le marqueur de type de signal supplémentaire.

**19.** Le procédé de la revendication 18, dans lequel :

le marqueur de type de signal comprend une information de position indiquant des positions sur le support d'enregistrement de plusieurs marqueurs de type de signal supplémentaires qui précèdent et suivent successivement le marqueur de type de signal;
l'étape de changement de la position de lecture comprend en outre l'étape de sélection, dans l'information de position, de la position d'un marqueur parmi les plusieurs marqueurs de type de signal supplémentaires, en réponse à une vitesse de recherche désirée; et
l'étape de changement de la position de lecture change la position de lecture pour la remplacer par une nouvelle position de lecture qui est indiquée par la position sélectionnée.

**20.** Le procédé de la revendication 17, dans lequel :

le procédé comprend en outre les étapes suivantes :
on fournit un dispositif d'enregistrement,
on enregistre dans le dispositif d'enregistrement l'information de position qui est incluse dans le marqueur de type de signal, et
en réponse à un ordre de recherche, on lit dans le dispositif de recherche l'information de position enregistrée; et
l'étape de changement de la position de lecture change la position de lecture sous la dépendance de l'information de position qui est lue dans le dispositif d'enregistrement.

**21.** Le procédé de la revendication 17, dans lequel :

une partie se prêtant à la décompression dans le signal codé à débit variable suit immédiatement chaque marqueur de type de signal dans le signal multiplexé;
l'étape de reproduction d'une partie du signal multiplexé reproduit une partie du signal multiplexé qui contient un marqueur de type de signal et une partie se prêtant à la décompression dans le signal codé à débit variable; et
le procédé comprend en outre les étapes suivantes :
on décompresse la partie se prêtant à la décompression dans le signal codé à débit variable, qui est démultiplexé à partir de la partie reproduite du signal multiplexé, et
on fournit à titre de signal de sortie la partie se prêtant à la décompression qui a été décompressée.

**22.** Le procédé de la revendication 21, dans lequel :

l'étape de changement de la position de lecture comprend l'étape d'extraction de l'information de position à partir du marqueur de type de signal;
l'étape de changement de la position de lecture change la position de lecture pour la remplacer par une nouvelle position de lecture qui est indiquée par l'information de position dans le marqueur de type de signal;
l'étape de reproduction reproduit à partir de la nouvelle position de lecture une partie du signal multiplexé comprenant un marqueur de type de signal supplémentaire qui contient une information de position supplémentaire, et une partie se prêtant à la décompression dans le signal codé à débit variable; et
après chaque répétition de l'étape de changement de la position de lecture, l'étape de décompression de la partie se prêtant à la décompression fournit un signal de sortie.

**23.** Le procédé de la revendication 21, dans lequel, dans le signal multiplexé :

le signal codé à débit variable comprend un signal vidéo comportant plusieurs images, chaque image étant compressée dans un mode parmi un mode intra-image et un mode inter-image; et

un marqueur de type de signal précède immédiatement chaque image compressée dans le mode intra-image.

**24.** Le procédé de la revendication 16, dans lequel, dans le signal multiplexé, le marqueur de type de signal est inclus dans un paquet d'un type prédéterminé.

**25.** Le procédé de la revendication 24, dans lequel, dans le signal multiplexé, le paquet du type prédéterminé précède immédiatement la partie de signal du type prédéterminé.

**26.** Le procédé de la revendication 24, dans lequel, dans le signal multiplexé :

le signal codé à débit variable comprend un signal vidéo comportant plusieurs images, chaque image étant compressée dans un mode parmi un mode intra-image et un mode inter-image; et
le paquet d'un type prédéterminé est un paquet d'entrée et il précède immédiatement chaque image compressée dans le mode intra-image.

**27.** Le procédé de la revendication 16, dans lequel, dans le signal multiplexé, le marqueur de type de signal est inclus dans un sous-code.

**28.** Le procédé de la revendication 27, dans lequel, dans le signal multiplexé :

le signal codé à débit variable est divisé en plusieurs secteurs, chaque secteur commençant par un en-tête de secteur; et
le sous-code est placé dans l'en-tête de secteur d'un secteur qui contient la partie de signal du type prédéterminé.

**29.** Le procédé de la revendication 28, dans lequel, dans le signal multiplexé, le sous-code est réparti parmi les en-têtes de secteur de plusieurs secteurs consécutifs contenant la partie de signal du type prédéterminé.

F i g. 1

EP 0 622 002 B1

F i g. 2

EP 0 622 002 B1

I MULTIPLEXED BIT STREAM

| Pack #0 | Pack #1 | Pack #2 | ............................ | | Pack #m | ISO11172 End Code |

Pack

| Pack Start Code | SCR | Mux Rate | Packet #0 | Packet #1 | ............ | Packet #n |

HEADER

Packet

| Packet Start Code Prefix | Id | Length | DTS/PTS | Code Data |

HEADER

F i g. 3

EP 0 622 002 B1

stream __id  table

| stream id(BINARY) | stream  type |
|---|---|
| 1 0 1 1  1 1 0 0 | reserved  stream |
| 1 0 1 1  1 1 0 1 | private __stream __ 1 |
| 1 0 1 1  1 1 1 0 | padding  stream |
| 1 0 1 1  1 1 1 1 | private __stream __ 2 |
| | |
| 1 1 0 X  X X X X | audio  stream-number  xxxx |
| 1 1 1 0  X X X X | video  stream-number  xxxx |
| 1 1 1 1  X X X X | reserved  data  stream-number  xxxx |

F i g.  4

EP 0 622 002 B1

START

PACK HEADER ADDITION ——— S1

NO

M4+M5≧D? ——— S2

YES

$$P_1 = D \times \frac{M_4}{M_4 + M_5}$$

$$P_2 = D - P_1$$

——— S3

ADD VIDEO
PACKET HEADER ——— S4

READ VIDEO DATA OF
P1 BYTES FROM CODE
BUFFER4, & OUTPUT ——— S5

ADD AUDIO
PACKET HEADER ——— S6

READ AUDIO DATA OF
P2 BYTES FROM CODE
BUFFER5, & OUTPUT ——— S7

END

F i g .  5

SERIES OF VIDEO BIT STREAMS

Fig. 6

53 MODULATION CIRCUIT

52 ECC ENCODER

51 SECTOR HEADER ADDITION CIRCUIT

50 TOC ADDITION CIRCUIT

54 CUTTING MACHINE

60 DISK

10 DSM

3 MULTIPLEXING CIRCUIT

56 TOC DATA GENERATION CIRCUIT

31 ENTRY POINT DETECTION CIRCUIT

33A ENTRY POINT STORAGE APPARATUS

2 AUDIO ENCODER

1 VIDEO ENCODER

AUDIO INPUT

VIDEO INPUT

Fig. 7

Fig. 8

EP 0 622 002 B1

| | |
|---|---|
| ENTRY #0 | SECTOR ADDRESS OF ENTRY POINT #0 |
| #1 | SECTOR ADDRESS OF ENTRY POINT #1 |
| #2 | SECTOR ADDRESS OF ENTRY POINT #2 |
| #3 | SECTOR ADDRESS OF ENTRY POINT #3 |
| | SECTOR ADDRESS OF ENTRY POINT #N-2 |
| #N-1 | SECTOR ADDRESS OF ENTRY POINT #N-1 |

Fig. 9

SECTOR          EFFECTIVE DATA SECTOR          EFFECTIVE DATA
HEADER                         HEADER

| 16 BYTES | 2048 BYTES | 16 BYTES | 2048 BYTES | 16 BYTES |

| 4 BYTES | 8 BYTES | 4 BYTES |
|---------|---------|---------|
| SECTOR NUMBER | NOT USED | CRC |

F i g.  1 0

Fig. 11

EP 0 622 002 B1

Fig. 12

EP 0 622 002 B1

Fig. 13

| PACKET START CODE PREFIX | ID | LENGTH | **** ID | **** PACKET TYPE | CURRENT # DATA STREAMS | CURRENT # VIDEO STREAMS | CURRENT # AUDIO STREAMS | -3 | -2 | -1 | +2 | +3 |
|---|---|---|---|---|---|---|---|---|---|---|---|---|

Fig. 14

START

PACK HEADER ADDITION — S11

S12
M4+M5≥D? — NO

YES — S13

$$P_1 = D \times \frac{M_4}{M_4+M_5}$$

$$P_2 = D - P_1$$

S14
VIDEO ENTRY POINT AT P1? — YES

NO — S15

VIDEO PACKET HEADER ADDITION

READ VIDEO DATA OF P1 BYTES FROM CODE BUFFER4, & OUTPUT — S16

AUDIO PACKET HEADER ADDITION — S17

READ AUDIO DATA OF P2 BYTES FROM CODE BUFFER5, & OUTPUT — S18

END

S19
$$P_1 = D \times \frac{M_4}{M_4+M_5}$$

$$P_2 = D - P_1$$

VIDEO PACKET HEADER ADDITION — S20

OUTPUT VIDEO DATA UP TO VIDEO ENTRY POINT — S21

ENTRY PACKET OUTPUT — S22

VIDEO PACKET HEADER OUTPUT — S23

OUTPUT REMAINING VIDEO DATA — S24

F i g . 1 5

Fig. 16

EP 0 622 002 B1

Fig. 17

EP 0 622 002 B1

SECTOR       EFFECTIVE DATA SECTOR      EFFECTIVE DATA
HEADER                    HEADER

| 16 BYTES | 2048 BYTES | 16 BYTES | 2048 BYTES | | |

| 4 BYTES | 8 BYTES | 4 BYTES |

SECTOR         SUBCODE AREA      CRC
NUMBER

Fig. 18

EP 0 622 002 B1

| SUBCODE SYNCHRONIZATION PATTERN | **** SUBCODE TYPE | CURRENT # DATA STREAMS | CURRENT # VIDEO STREAMS | CURRENT # AUDIO STREAMS | -3 | -2 | -1 | +1 | +2 | +3 | CRC |
|---|---|---|---|---|---|---|---|---|---|---|---|
| 2BYTES | 1BYTE | 1BYTE | 1BYTE | 1BYTE | 4BYTES | 4BYTES | 4BYTES | 4BYTES | 4BYTES | 4BYTES | 2BYTES |

F I g. 19

I PICTURE(150Kbits／FRAME)

P PICTURE(75Kbits／FRAME)

B PICTURE(5Kbits／FRAME)

GOP HEADER        GOP HEADER        GOP HEADER

EP 0 622 002 B1

F i g.  2 0